(19) Europäisches Patentamt European Patent Office Office européen des brevets

(11) **EP 4 195 679 B1**

(12) **EUROPEAN PATENT SPECIFICATION**

(45) Date of publication and mention of the grant of the patent:
**18.12.2024 Bulletin 2024/51**

(21) Application number: **22822251.9**

(22) Date of filing: **10.06.2022**

(51) International Patent Classification (IPC):
**G06T 3/40** *(2024.01)*    **G06T 5/70** *(2024.01)*
**H04N 23/60** *(2023.01)*    **H04N 23/63** *(2023.01)*
**H04N 23/951** *(2023.01)*    **H04N 5/91** *(2006.01)*
**H04N 23/62** *(2023.01)*

(52) Cooperative Patent Classification (CPC):
**G06T 3/40; G06T 5/70; H04N 5/91; H04N 23/62;**
**H04N 23/63; H04N 23/951;** G06T 2207/10016;
G06T 2207/20204

(86) International application number:
**PCT/CN2022/098260**

(87) International publication number:
**WO 2023/060921 (20.04.2023 Gazette 2023/16)**

(54) **IMAGE PROCESSING METHOD AND ELECTRONIC DEVICE**

BILDVERARBEITUNGSVERFAHREN UND ELEKTRONISCHE VORRICHTUNG

PROCÉDÉ DE TRAITEMENT D'IMAGE ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2021 CN 202111199715**
**28.01.2022 CN 202210108412**

(43) Date of publication of application:
**14.06.2023 Bulletin 2023/24**

(73) Proprietor: **Honor Device Co., Ltd.**
**Shenzhen, Guangdong 518040 (CN)**

(72) Inventors:
• **CHEN, Bin**
**Shenzhen, Guangdong 518040 (CN)**
• **WANG, Ning**
**Shenzhen, Guangdong 518040 (CN)**
• **WANG, Yu**
**Shenzhen, Guangdong 518040 (CN)**
• **ZENG, Xiangrui**
**Shenzhen, Guangdong 518040 (CN)**

(74) Representative: **Körber, Martin Hans**
**Mitscherlich PartmbB**
**Patent- und Rechtsanwälte**
**Karlstraße 7**
**80333 München (DE)**

(56) References cited:
CN-A- 110 233 971    CN-A- 111 583 161
CN-A- 111 614 867    CN-A- 111 754 405
CN-A- 111 784 603    CN-A- 112 150 400
CN-A- 113 066 018    US-A1- 2002 080 246
US-A1- 2023 196 516

• YUCHENG LU ET AL: "Progressive Joint Low-light Enhancement and Noise Removal for Raw Images", ARXIV.ORG, CORNELL UNIVERSITY LIBRARY, 201 OLIN LIBRARY CORNELL UNIVERSITY ITHACA, NY 14853, 28 June 2021 (2021-06-28), XP081996083

## Description

## TECHNICAL FIELD

This application relates to the field of image processing, and specifically, to an image processing method and an electronic device.

## BACKGROUND

When a video is shot in a dark environment, for example, when a video is recorded at night, noise of the video is relatively large because an amount of entering light is relatively small. To reduce the image noise in the video and improve image quality of the video, raw-domain denoising is usually performed on an image in the video. Because operation performance and power consumption of an electronic device are limited, when raw-domain denoising is performed, a size of the image needs to be reduced, that is, downsampling needs to be performed on the raw-domain image. However, a current manner of performing downsampling on a raw-domain image stream significantly reduces image definition.

Therefore, when downsampling is performed on a raw-domain image stream, how to improve image definition becomes an urgent problem to be resolved.

Yucheng Lu et al.: "Progressive Joint Low-light Enhancement and Noise Removal for Raw Images", arXiv.org, Cornell University Library, 201 Olin Library Cornell University Ithaca, NY 14853, 28 June 2021 discloses an image processing method that performs joint illumination adjustment, color enhancement, and denoising using a coefficient estimation branch and a joint operation branch, wherein the coefficient estimation branch works in a low-resolution space and predicts the coefficients for enhancement via bilateral learning, whereas the joint operation branch works in a fullresolution space and progressively performs joint enhancement and denoising.

CN 111 784 603 A discloses an RAW domain image denoising method comprising obtaining an initial image, calculating the brightness value of each pixel according to the chromatic value of each pixel of the initial image to obtain an initial brightness map, extracting chromaticity sub-graphs of colors of the initial image and corresponding brightness sub-graphs, performing guided filtering on the chrominance sub-graphs by taking the brightness sub-graphs as guide graphs to obtain primarily denoised brightness sub-graphs and primarily denoised chrominance sub-graphs, performing joint filtering on the primarily denoising brightness sub-graphs and the corresponding primarily denoised chrominance sub-graphs to obtain secondarily denoised chrominance sub-graphs, calculating an output chromaticity value of each pixel by applying the chromaticity value of each pixel of the secondary denoised chromaticity sub-graphs, and performing inverse interpolation calculation on the plurality of chromaticity sub-graphs based on the output chromaticity value of each pixel to obtain an output image.

CN 111 614 867 A discloses a video denoising method comprising acquiring video data, acquiring environmental parameters related to denoising in an environment of the mobile terminal, calculating an extent of conflict between the environment and the denoising based on the environmental parameters and determining, based on the extent of conflict, a state of denoising the video data.

## SUMMARY

To solve the problem of a definition loss caused by downsampling on a raw-domain image stream, and improve image definition, embodiments of the present application provide an image processing method, an electronic device, a chip system, a computer-readable storage medium, and computer program product according to the enclosed independent claims. Advantageous features of the present invention are defined in the corresponding subclaims.

In the following, parts of the description and drawings referring to embodiments, which are not covered by the claims, are not presented as embodiments of the invention but as examples useful for understanding the invention.

According to a first aspect, an image processing method, as defined by claim 1, is provided.

Further detailed embodiments are defined by the dependent claims.

According to a second aspect, an electronic device is provided, including a module/unit configured to perform the first aspect or any image processing method in the first aspect.

According to a third aspect, an electronic device is provided. The electronic device includes one or more processors and a memory. The memory is coupled to the one or more processors. The memory is configured to store computer program code. The computer program code includes computer instructions. The one or more processors invoke the computer instructions to enable the electronic device to perform the image processing method in the first aspect.

According to a fourth aspect, an electronic device is provided. The electronic device includes one or more processors and a memory. The memory is coupled to the one or more processors. The memory is configured to store computer program code. The computer program code includes computer instructions. The one or more processors invoke the computer instructions to enable the electronic device to perform any image processing method in the first aspect.

According to a fifth aspect, a chip system is provided. The chip system is applied to an electronic device, the chip system includes one or more processors, and the processor is configured to invoke computer instructions to enable the electronic device to perform the first aspect or any image processing method in the first aspect.

According to a sixth aspect, a computer-readable storage medium is provided. The computer-readable storage medium stores computer program code. When the computer program code is run by an electronic device, the electronic device is enabled to perform the first aspect or any image processing method in the first aspect.

According to a seventh aspect, a computer program product is provided. The computer program product includes computer program code. When the computer program code is run by an electronic device, the electronic device is enabled to perform the first aspect or any image processing method in the first aspect.

In embodiments of this application, target processing and/or second target processing on the first image stream may be determined based on the ambient brightness of the photographing environment in which the electronic device is located. Because the image quality of the first image stream captured by the electronic device is related to the ambient brightness of the photographing environment in which the electronic device is located, different target processing may be performed on the first image stream based on the ambient brightness, to improve image quality. In addition, in this application, there is no need to perform a same target operation on the first image stream in different ambient brightness, that is, different target processing on the first image stream may be adjusted in real time based on the ambient brightness. Therefore, power consumption of the electronic device can be reduced to some extent.

## BRIEF DESCRIPTION OF DRAWINGS

FIG. 1 is a schematic diagram of a hardware system of an electronic device applicable to this application;
FIG. 2 is a schematic diagram of a software system of an electronic device applicable to this application;
FIG. 3(a) and FIG. 3(b) are a schematic diagram of an application scenario applicable to an embodiment of this application;
FIG. 4(a) and FIG. 4(b) are a schematic diagram of an application scenario applicable to an embodiment of this application;
FIG. 5 is a schematic diagram of an image processing method applicable to an embodiment of this application;
FIG. 6 is a schematic diagram of an architecture of an image processing method applicable to this application;
FIG. 7 is a schematic diagram of an architecture of an image processing method applicable to this application;
FIG. 8 is a schematic diagram of an effect of an image processing method according to an embodiment of this application;

FIG. 9 is a schematic diagram of a raw-domain image in a Bayer format according to an embodiment of this application;
FIG. 10(a) and FIG. 10(b) are a schematic diagram of a display interface of an electronic device according to an embodiment of this application;
FIG. 11(a) and FIG. 11(b) are a schematic diagram of a display interface of an electronic device according to an embodiment of this application;
FIG. 12 is a schematic diagram of a display interface of an electronic device according to an embodiment of this application;
FIG. 13 is a schematic diagram of a structure of an electronic device according to an embodiment of this application; and
FIG. 14 is a schematic diagram of a structure of an electronic device according to an embodiment of this application.

## DESCRIPTION OF EMBODIMENTS

In embodiments of this application, the following terms "first", "second", "third", and "fourth" are merely used for description, but should not be understood as indicating or implying relative importance or implying a quantity of indicated technical features.

To facilitate understanding of embodiments of this application, related concepts in embodiments of this application are first briefly described.

1. Binning

Binning is an image read mode, and may refer to combining adjacent pixels into one pixel.

For example, binning may combine $n \times n$ pixels into one pixel. For example, binning may combine $3 \times 3$ adjacent pixels into one pixel. To be specific, colors of the $3 \times 3$ adjacent pixels are presented in a form of one pixel.

2. v2h2

v2h2 refers to a downsampling manner based on weighted averaging of rows and columns spaced horizontally and vertically.

3. Downsampling

Downsampling may also be referred to as image reduction or downscaling. Downsampling is used to reduce an original image, that is, generate a thumbnail of a corresponding image; or make an image match a corresponding display region; or reduce a dimension of a feature and retain valid information, to avoid overfitting to some extent, and keep rotation, translation, and scaling not deformed.

## 4. Image quality enhancement

Image quality enhancement may include but is not limited to enhancing an image in terms of exposure, definition, a color, a texture, noise, image stabilization, focusing, artifacts, or the like of the image.

## 5. Image stream

An image stream may refer to an image sequence that includes at least two frames of images. For example, the image sequence may have a specific time order.

## 6. Preview stream

A preview stream may refer to preview images that correspond to an image stream obtained in a preview state and that have a specific time order in the preview state. The preview state may include a common preview state and a recording preview state. For example, the common preview state means that a preview image is displayed in a viewfinder in real time in a camera application before a photographing control or a video recording control is tapped. Alternatively, the common preview state may mean that a preview image of a video call is displayed in a viewfinder in real time in a video call application. The recording preview state may mean that a recorded image is displayed in a viewfinder in a recording interface in real time after a video recording control in a camera application is tapped and before recording is stopped, where the recorded image may also be referred to as a preview image.

## 7. Video stream

A video stream may be an image stream used for playback after video recording ends.

## 8. 4K

4K refers to resolution. For example, 4K may mean that resolution is 4096×2160.

## 9. 2K

2K refers to resolution. For example, 2K may mean that resolution is 2048×1080.

## 10. Raw domain

A raw domain refers to raw color space.

## 11. YUV domain

A YUV domain refers to YUV color space. "Y" represents luminance (Luminance or Luma), that is, a grayscale value. "U" and "V" represent chrominance (Chrominance or Chroma), and are used to describe a color and saturation of an image and specify a color of a pixel.

## 12. RGB domain

An RGB domain refers to RGB color space. R represents red, G represents green, and B represents blue.

## 13. Color space

Color space may also be referred to as a color model (or referred to as a color system), and is used to describe a color in some standards in a usually acceptable manner.

## 14. Lighting value (Lighting Value, LV)

A lighting value is used to estimate ambient brightness, and a specific calculation formula of the lighting value is as follows:

$$LV = 10 * \log_2 \left( \frac{\text{Aperture}^2}{\text{Exposure}} * \frac{100}{\text{Iso}} * \frac{\text{Luma}}{46} \right)$$

Herein, Exposure is exposure duration, Aperture is an aperture size, Iso is a light sensitivity, and Luma is an average value of Y of an image in XYZ space.

## 15. Illuminance

Illuminance is a unit that reflects illumination intensity. A physical meaning of the illuminance is luminous flux irradiated on a unit area. The illuminance is measured by a quantity of lumens (Lm) per square meter, also referred to as lux (Lux). 1 Lux = 1 Lm/m², and Lm is a unit of luminous flux.

The following describes the technical solutions in embodiments of this application with reference to the accompanying drawings.

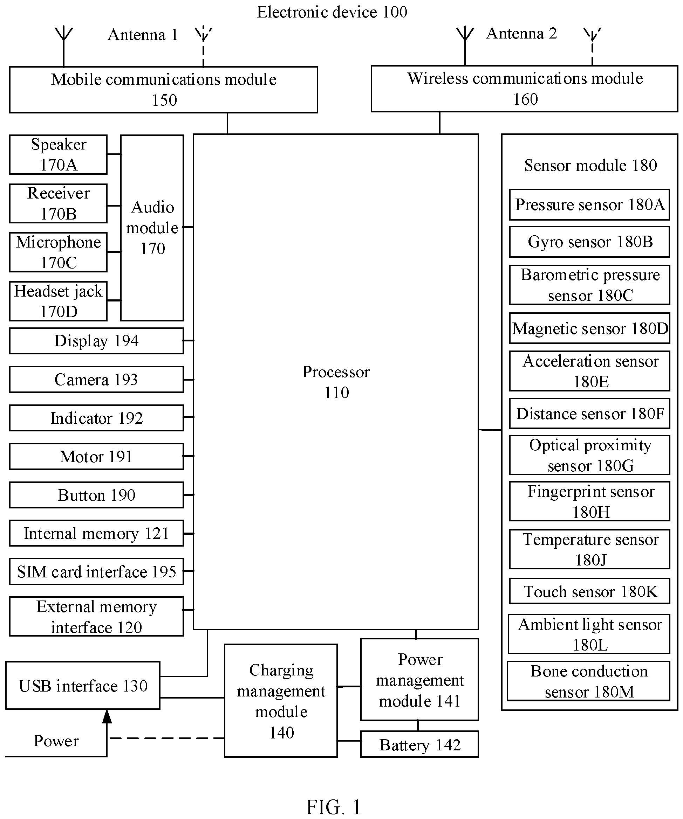

FIG. 1 shows a hardware system of an electronic device applicable to this application.

The electronic device 100 may be a mobile phone, a smart screen, a tablet computer, a wearable electronic device, a vehicle-mounted electronic device, an augmented reality (augmented reality, AR) device, a virtual reality (virtual reality, VR) device, a notebook computer, an ultra-mobile personal computer (ultra-mobile personal computer, UMPC), a netbook, a personal digital assistant (personal digital assistant, PDA), a projector, or the like. A specific type of the apparatus 100 is not limited in embodiments of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 170, a button 190, a motor 191, an indicator 192, a camera 193, a display 194, a subscriber identification module (subscriber identification module, SIM) card interface 195, and the like. The sensor module 170 may include a pressure sensor 170A, a gyro sensor 170B, a barometric pressure sensor 170C, a magnetic sensor 170D, an acceleration sensor 170E, a distance sensor 170F, an optical proximity sensor 170G, a fingerprint sensor 170H, a temperature sensor 170J, a touch sensor 170K, an ambient light sensor 170L, a bone conduction sensor 170M, and the like.

It should be noted that the structure shown in FIG. 1 does not constitute a specific limitation on the electronic device 100. In some other embodiments of this application, the electronic device 100 may include more or fewer components than the components shown in FIG. 1, or the electronic device 100 may include a combination of some components in the components shown in FIG. 1, or the electronic device 100 may include sub-components of some components in the components shown in FIG. 1. The components shown in FIG. 1 may be implemented by hardware, software, or a combination of software and hardware.

The processor 110 may include one or more processing units. For example, the processor 110 may include at least one of the following processing units: an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and a neural-network processing unit (neural-network processing unit, NPU). Different processing units may be independent components, or may be an integrated component.

The controller may generate an operation control signal based on instruction operation code and a time sequence signal, to complete control of instruction fetching and instruction execution.

A memory may further be disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

In this embodiment of this application, the processor 110 may perform the following operations: displaying a first interface, where the first interface is a preview interface or a recording interface; determining that a status of the electronic device meets a first preset condition; obtaining a first image stream, where the first image stream is an image stream of first color space; performing first image processing on the first image stream to obtain a second image stream of second color space; performing second image processing on the first image stream to obtain a third image stream of the first color space, where the second image processing includes downsampling and image enhancement; performing third image processing on the third image stream to obtain a fourth image stream of the second color space; fusing the second image stream and the fourth image stream to obtain a fifth image stream; and displaying and/or storing the fifth image stream.

The connection relationship between the modules shown in FIG. 1 is merely a schematic description, and does not constitute a limitation on the connection relationship between the modules of the electronic device 100. Optionally, the modules of the electronic device 100 may alternatively use a combination of a plurality of connection manners in the foregoing embodiment.

A wireless communication function of the electronic device 100 may be implemented by using components such as the antenna 1, the antenna 2, the mobile communications module 150, the wireless communications module 160, the modem processor, and the baseband processor.

The antenna 1 and the antenna 2 are configured to transmit and receive electromagnetic wave signals. Each antenna in the electronic device 100 may be configured to cover one or more communication bands. Different antennas may be multiplexed to improve antenna utilization. For example, the antenna 1 may be multiplexed into a diversity antenna of a wireless local area network. In some other embodiments, the antenna may be used in combination with a tuning switch.

The electronic device 100 may implement a display function by using the GPU, the display 194, and the application processor. The GPU is a microprocessor for image processing, and is connected to the display 194 and the application processor. The GPU is configured to perform mathematical and geometric calculation and render graphics. The processor 110 may include one or more GPUs that execute program instructions to generate or change display information.

The display 194 may be configured to display an image or a video.

The apparatus 100 may implement a photographing function by using the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may perform algorithm optimization on noise, brightness, and a color of an image, and the ISP may further optimize parameters such as exposure and a color temperature in a photographing scenario. In some embodiments, the ISP may be disposed in the camera 193.

The camera 193 is configured to capture a still image or a video. An optical image of an object is generated by using a lens and projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion into a digital image signal. The ISP outputs the digital image signal to the DSP for processing. The DSP converts the digital image signal into a standard image signal in a format such as red green blue (red green blue, RGB) or YUV In some embodiments, the electronic device 100 may include one or N cameras 193, where N is a positive integer greater than 1.

For example, in embodiments of this application, the camera 193 may obtain a first image stream.

The digital signal processor is configured to process a digital signal. In addition to processing the digital image signal, the digital signal processor may further process another digital signal. For example, when the electronic device 100 selects a frequency, the digital signal processor is configured to perform Fourier transform or the like on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The gyro sensor 170B may be configured to determine a motion gesture of the electronic device 100. In some embodiments, angular velocities of the electronic device 100 around three axes (that is, the x-axis, the y-axis, and the z-axis) may be determined by using the gyro sensor 170B. The gyro sensor 170B may be used for image stabilization during photographing. For example, when a shutter is pressed, the gyro sensor 170B detects a jittering angle of the electronic device 100, calculates, based on the angle, a distance for which a lens module needs to compensate, and enables the lens to offset jittering of the electronic device 100 through reverse motion, to implement image stabilization. The gyro sensor 170B may be further used in a navigation scenario, a motion-controlled gaming scenario, and the like.

For example, in embodiments of this application, the gyro sensor 170B may be configured to collect jitter information, and the jitter information may be used to indicate a pose change of the electronic device in a photographing process.

The acceleration sensor 170E may detect values of acceleration of the electronic device 100 in all directions (usually on the x-axis, the y-axis, and the z-axis). When the electronic device 100 is static, the acceleration sensor 170E may detect magnitude and a direction of gravity. The acceleration sensor 170E may be further configured to recognize a posture of the electronic device 100 as an input parameter of an application such as switching between landscape mode and portrait mode and a pedometer.

The distance sensor 170F is configured to measure a distance. The electronic device 100 may measure a distance through infrared or laser. In some embodiments, for example, in a photographing scenario, the electronic device 100 may measure a distance by using the distance sensor 170F, to implement quick focusing.

The ambient light sensor 170L is configured to sense ambient light brightness. The electronic device 100 may adaptively adjust brightness of the display 194 based on the sensed ambient light brightness. The ambient light sensor 170L may also be configured to automatically adjust a white balance during photographing. The ambient light sensor 170L may further cooperate with the optical proximity sensor 170G to detect whether the electronic device 100 is in a pocket, to prevent an accidental touch.

The fingerprint sensor 170H is configured to collect a fingerprint. The electronic device 100 may implement functions such as unlocking, application lock access, photographing, call answering, and the like based on a feature of the collected fingerprint.

The touch sensor 170K is also referred to as a touch device. The touch sensor 170K may be disposed on the display 194. The touch sensor 170K and the display 194 form a touchscreen, and the touchscreen is also referred to as a touch screen. The touch sensor 170K is configured to detect a touch operation performed on or near the touch sensor 170K. The touch sensor 170K may transfer the detected touch operation to the application processor to determine a type of a touch event. Visual output related to the touch operation may be provided by using the display 194. In some other embodiments, the touch sensor 170K may alternatively be disposed on a surface of the electronic device 100 at a position different from that of the display 194.

The foregoing describes in detail the hardware system of the electronic device 100. The following describes a software system of the electronic device 100.

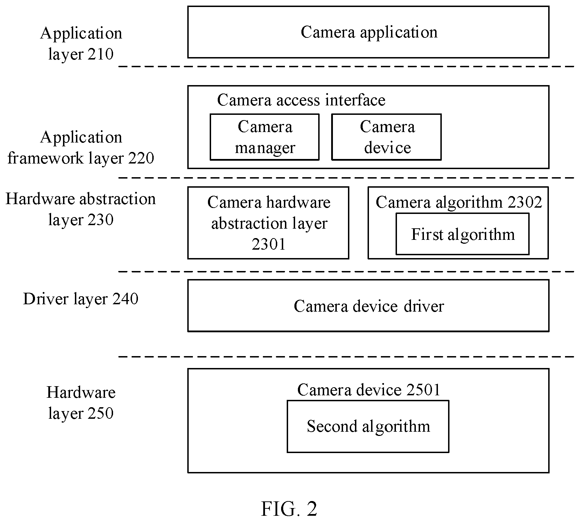

FIG. 2 is a schematic diagram of a software system of an electronic device according to an embodiment of this application.

As shown in FIG. 2, a system architecture may include an application layer 210, an application framework layer 220, a hardware abstraction layer 230, a driver layer 240, and a hardware layer 250.

The application layer 210 may include applications such as Camera, Gallery, Calendar, Phone, Map, Navigation, WLAN, Bluetooth, Music, Videos, and Messages.

The application framework layer 220 provides an application programming interface (application programming interface, API) and a programming framework for the application at the application layer. The application framework layer may include some predefined functions.

For example, the application framework layer 220 may include a camera access interface. The camera access interface may include a camera manager and a camera device. The camera manager may be configured to provide an access interface for managing a camera. The camera device may be configured to provide an interface for accessing the camera.

The hardware abstraction layer 230 is configured to abstract hardware. For example, the hardware abstraction layer may include a camera abstraction layer and another hardware device abstraction layer. The camera hardware abstraction layer may invoke a camera algorithm.

For example, the hardware abstraction layer 230 includes a camera hardware abstraction layer 2301 and a camera algorithm 2302. The camera algorithm 2302 may include a first algorithm. The first algorithm may be a software algorithm for image processing.

For example, the first algorithm may refer to code implemented without depending on specific hardware. For example, the code may be usually run in a CPU.

The driver layer 240 is configured to provide drivers for different hardware devices. For example, the driver layer may include a camera device driver.

The hardware layer 250 may include a camera device and another hardware device.

For example, the hardware layer 250 includes a camera device 2501. The camera device 2501 may include a second algorithm.

For example, the camera device 2501 may include an image signal processor, and the second algorithm may be an image processing algorithm run in the image signal processor.

It should be understood that the second algorithm may be an algorithm that needs to be implemented based on specific hardware.

Currently, when a video is shot in a dark environment, for example, when a video is recorded at night, noise of the video is relatively large because an amount of entering light is relatively small. To reduce the noise in the video and improve image quality of the video, raw-domain denoising is usually performed on an image in the video. Because operation performance and power consumption of an electronic device are limited, when raw-domain denoising is performed, a size of the image needs to be reduced. However, performing downsampling on a raw-domain image stream reduces image definition.

In view of this, embodiments of this application provide an image processing method. In embodiments of this application, when it is determined that a status of an electronic device meets a first preset condition, a first image stream may be obtained. The first image stream may be an image stream of first color space. First image processing may be performed on the first image stream to obtain a second image stream of second color space. Second image processing may be performed on the first image stream to obtain a third image stream of the first color space, and the second image processing may include downsampling and image enhancement. In other words, the third image stream may be a small-sized and quality-enhanced image stream corresponding to the first image stream. Third image processing is performed on the third image stream to obtain a fourth image stream of the second color space. In other words, the fourth image stream is a quality-enhanced image stream compared with the second image stream. The second image stream and the fourth image stream are fused to obtain a fifth image stream. Because the fourth image stream is obtained based on the third image stream, and the third image stream is obtained by performing downsampling and image enhancement on the first image stream, the fourth image stream has higher image quality and lower definition than the second image stream. In embodiments of this application, the definition of the fourth image stream may be compensated based on the second image stream, and the image quality of the second image stream may be compensated based on the fourth image stream. Therefore, the fifth image stream is obtained by fusing the second image stream and the fourth image stream, and the fifth image stream may have enhanced image quality and high definition. This avoids a problem of a definition loss caused by downsampling on a raw-domain image stream, and improves image definition.

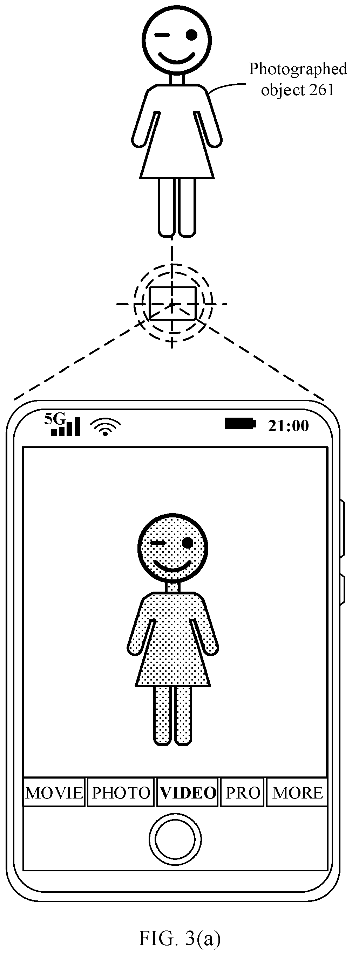

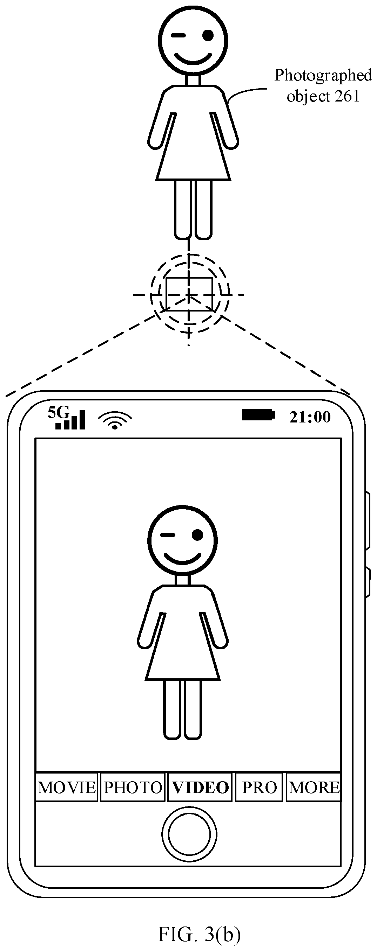

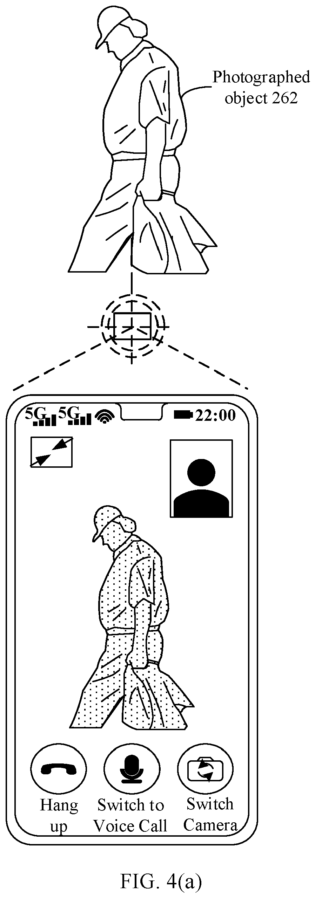

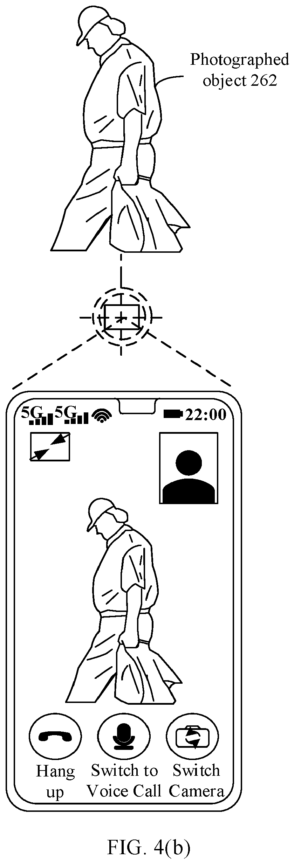

Application scenarios of the image processing method provided in embodiments of this application are described below by using examples with reference to FIG. 3(a) and FIG. 3(b) and FIG. 4(a) and FIG. 4(b).

Application scenario 1: video recording

The image processing method in this application may be used to record a video, for example, may be used to record a video in a dark scenario. As shown in FIG. 3(a) and FIG. 3(b), when a video is recorded in a night scenario, an amount of light entering an electronic device is small, resulting in relatively large noise of an obtained image. FIG. 3(a) shows a preview image of a photographed object 261 that is obtained by performing image processing by using an existing solution, and FIG. 3(b) shows a preview image of a photographed object 261 that is obtained by using the image processing method provided in embodiments of this application. Compared with the preview image shown in FIG. 3(a), the preview image shown in FIG. 3(b) is improved in definition. Therefore, according to the image processing method in embodiments of this application, image definition and image quality can be improved.

Application scenario 2: video call

The image processing method in this application may be applied to the video call field. For example, during a video call in a dark scenario, an amount of light entering an electronic device is small, resulting in relatively large noise of an image in the video call. As shown in FIG. 4(a) and FIG. 4(b), FIG. 4(a) shows a preview image of a photographed object 262 that is obtained by performing image processing by using an existing solution, and FIG. 4(b) shows a preview image of a photographed object 262 that is obtained by using the image processing method provided in embodiments of this application. Compared with the preview image shown in FIG. 4(a), the preview image shown in FIG. 4(b) is improved in definition. Therefore, according to the image processing method in embodiments of this application, image definition and image quality can be improved.

It should be understood that the foregoing is an example for describing an application scenario, and constitutes no limitation on the application scenario in this application.

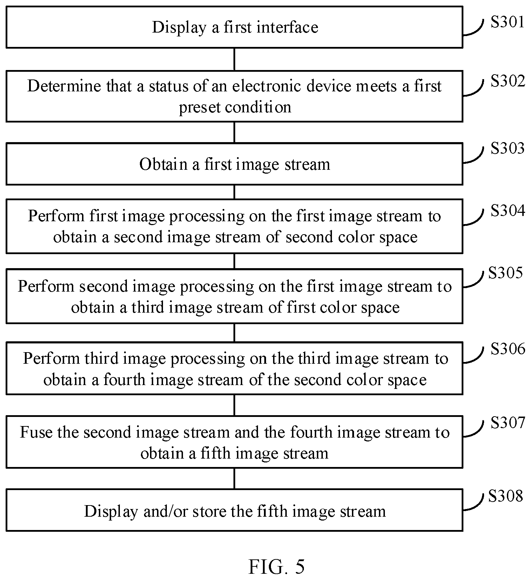

The following describes in detail the image processing method in embodiments of this application with reference to FIG. 5 to FIG. 12.

FIG. 5 is a schematic diagram of an image processing method applicable to this application according to an embodiment of this application. The image processing method may be performed by the electronic device shown in FIG. 1. The image processing method includes step S301 to step S308. The following separately describes step S301 to step S308 in detail.

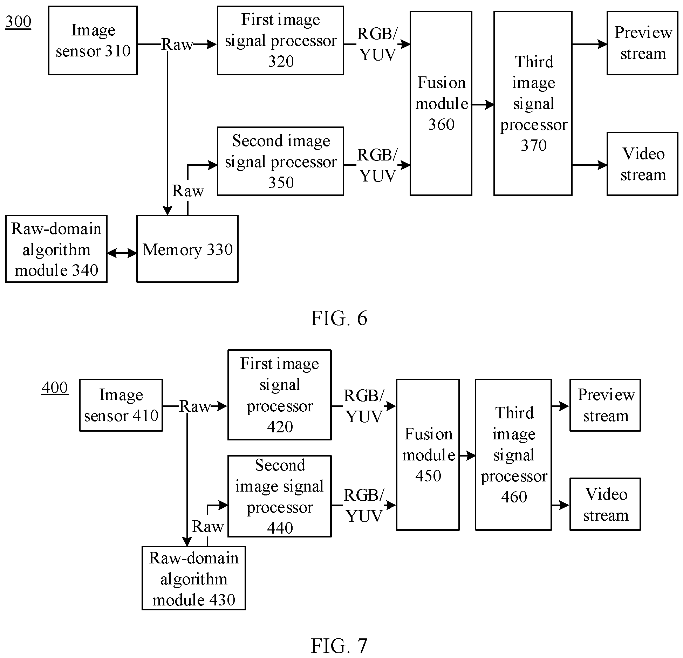

It should be understood that the image processing method shown in FIG. 5 is applicable to a system architecture shown in FIG. 6 or FIG. 7.

Step S301: Display a first interface.

For example, the first interface may be a preview interface. For example, when the electronic device is in a preview state, an interface displayed by the electronic device may be a preview interface. The preview state may include a common preview state and a recording preview state. For example, the common preview state means that a preview image is displayed in a viewfinder in real time in a camera application before a photographing control or a video recording control is tapped. Alternatively, the common preview state may mean that a preview image of a video call is displayed in a viewfinder in real time in a video call application. The recording preview state may mean that a preview recorded image is displayed in a viewfinder in a recording interface in real time after a video recording control in a camera application is tapped.

For example, the first interface may be a recording interface. For example, when the electronic device is in a recording state, an interface displayed by the electronic device may be a recording interface.

Step S302: Determine that a status of the electronic device meets a first preset condition.

Optionally, the determining that a status of the electronic device meets a first preset condition may include:

determining that the status of the electronic device is a recording state, and ambient brightness of a photographing environment in which the electronic device is located is less than a first preset threshold.

Scenario 1: The electronic device detects an operation of running a camera application. After the camera application runs, the electronic device detects that a brightness value of a photographing environment is less than the first preset threshold (for example, a night scenario). After a tap operation on a control indicating video recording is detected, the image processing method in this embodiment of this application starts to be performed, and image processing is performed, by using the image processing method in this embodiment of this application, on an image stream captured by an image sensor, to obtain a video stream. A time sequence of detecting that the brightness value of the photographing environment is less than the first preset threshold and detecting the tap operation on the control indicating video recording is not limited.

Scenario 2: The electronic device is in the video recording state, and the electronic device moves from a photographing environment whose brightness value is greater than or equal to the first preset threshold to a photographing environment whose brightness value is less than the first preset threshold. When detecting that a brightness value of a current photographing environment is less than the first threshold, the electronic device starts to perform the image processing method in this embodiment of this application.

Optionally, the determining that a status of the electronic device meets a first preset condition may include:

determining that the status of the electronic device is a preview state, and ambient brightness of a photographing environment in which the electronic device is located is less than a first preset threshold.

Scenario 3: The electronic device detects an operation of running a camera application. After the camera application runs, the electronic device detects that a brightness value of a photographing environment is less than the first preset threshold (for example, a night scenario). When the camera application is opened, before a photographing/video recording button is pressed, a preview image may be displayed in a viewfinder in real time. The preview image may be obtained by using the image processing method provided in this embodiment of this application.

Scenario 4: The electronic device detects an operation of running a video call application. After the video call application runs, the electronic device detects that a brightness value of a photographing environment is less than the first preset threshold (for example, a night scenario), and the electronic device may display a video call image in real time. The video call image may be obtained by using the image processing method provided in this embodiment of this application.

Scenario 5: The electronic device is in the preview state, and the electronic device moves from a photographing environment whose brightness value is greater than or equal to the first preset threshold to a photographing environment whose brightness value is less than the first preset threshold. When detecting that a brightness value of a current photographing environment is less than the first threshold, the electronic device starts to perform the image processing method in this embodiment of this application.

For example, for the foregoing scenario 1 to scenario 5, a greater brightness value of the electronic device indicates higher ambient brightness of the photographing environment in which the electronic device is located. Therefore, the ambient brightness of the electronic device may be determined by using a lighting value of the electronic device. When the lighting value of the electronic device is less than the first preset threshold, it may indicate that the ambient brightness of the photographing environment in which the electronic device is located is less than the first preset threshold.

A lighting value is used to estimate ambient brightness, and a specific calculation formula of the lighting value is as follows:

$$LV = 10 * \log_2 \left( \frac{\text{Aperture}^2}{\text{Exposure}} * \frac{100}{\text{Iso}} * \frac{\text{Luma}}{46} \right)$$

Herein, Exposure is exposure duration, Aperture is an aperture size, Iso is a light sensitivity, and Luma is an average value of Y of an image in XYZ space.

Optionally, the determining that a status of the electronic device meets a first preset condition may include:

determining that a photographing mode of the electronic device is a night mode, where the night mode is a mode in a camera application.

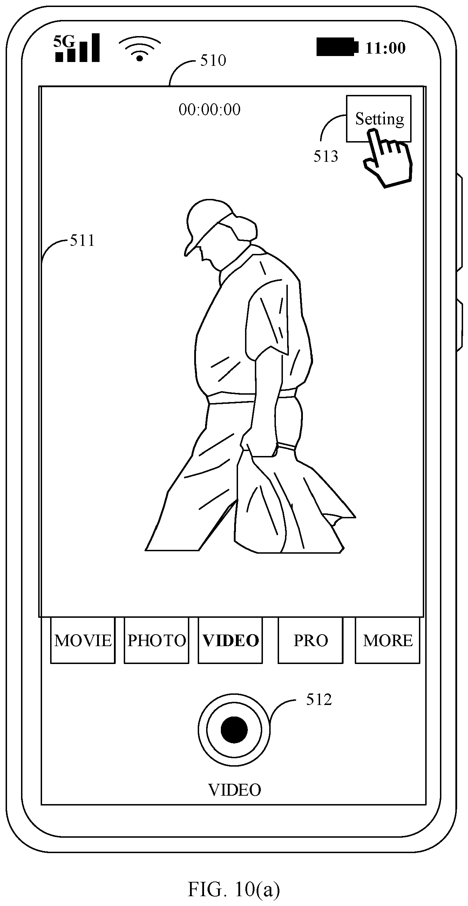

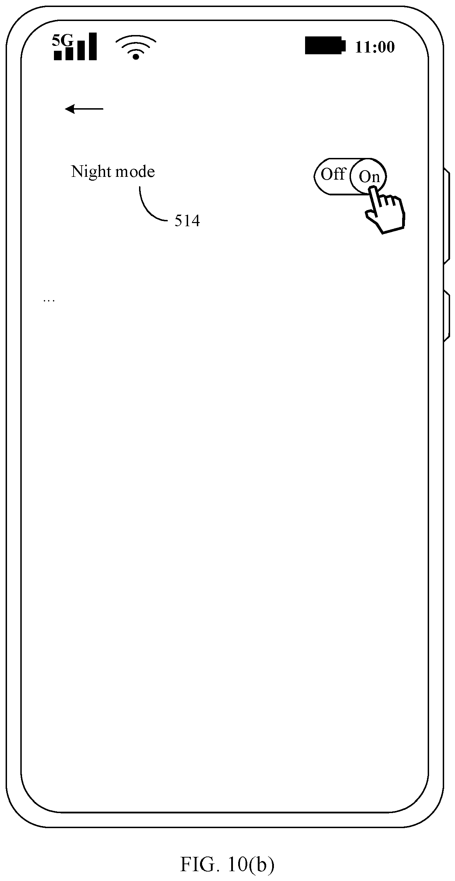

Scenario 6: The electronic device detects an operation of running a camera application. After the camera application runs, an operation of enabling a night mode of the camera application is detected, as shown in FIG. 10(a) and FIG. 10(b). After the operation of enabling the night mode is detected, the image processing method in this embodiment of this application starts to be performed.

It should be understood that the image processing method in this application may be applied to a video recording state or a video preview state. The foregoing uses the scenario 1 to the scenario 6 as examples to describe that the status of the electronic device meets the first preset condition. This is not limited in this application.

Step S303: Obtain a first image stream, where the first image stream is an image stream of first color space.

For example, the first image stream is a raw-domain image stream captured by an image sensor in the electronic device. The raw-domain image stream is an image stream in raw color space.

Step S304: Perform first image processing on the first image stream to obtain a second image stream of second color space.

For example, the second color space may be RGB color space or YUV color space.

Optionally, the second image stream may be an image stream of the RGB color space. The first image processing may include demosaicing. For example, the first image stream may be converted into an image stream of the RGB color space by performing demosaicing on the first image stream.

Optionally, the second image stream may be an image stream of the YUV color space. The first image processing may include demosaicing and color space conversion. For example, the first image stream may be converted into an image stream of the RGB color space by performing demosaicing on the first image stream, and the image stream of the RGB color space may be converted into an image stream of the YUV color space.

It should be understood that the first image processing may alternatively include another image processing algorithm of the RGB color space or the YUV color space. This is not limited in this application.

Step S305: Perform second image processing on the first image stream to obtain a third image stream of the first color space.

The second image processing may include downsampling and image enhancement.

It should be understood that the downsampling may be referred to as image reduction or downscaling. The downsampling is used to reduce a size of an image to generate a small-sized image corresponding to the image. An algorithm used for downsampling is not limited in this application.

Optionally, an image enhancement algorithm may include at least one of the following:

a denoising algorithm, a super-resolution algorithm, a deblurring algorithm, a contrast adjustment algorithm, a brightness adjustment algorithm, or a high dynamic range image algorithm.

It should be understood that the third image stream may be a quality-enhanced small-sized image stream obtained by performing the second image processing on the first image stream. For example, downsampling may be performed on the first image stream to obtain a small-sized image stream corresponding to the first image stream, and image enhancement is performed on the small-sized image stream to obtain a quality-enhanced small-sized image.

Optionally, the third image stream includes a third image, and the first image stream includes a first image. An image size of the third image is less than an image size of the first image.

In this embodiment of this application, the third image may be obtained by performing the second image processing on the first image, and the second image processing includes downsampling and image enhancement. Therefore, the image size of the third image is less than the image size of the first image.

It may be understood that S304 and S305 may be performed simultaneously without a time sequence limitation.

Step S306: Perform third image processing on the third image stream to obtain a fourth image stream of the second color space.

For example, the second color space may be RGB color space or YUV color space.

Optionally, the fourth image stream may be an image stream of the RGB color space. The third image processing may include demosaicing. For example, the third image stream may be converted into an image stream of the RGB color space by performing demosaicing on the third image stream.

Optionally, the fourth image stream may be an image stream of the YUV color space. The third image processing may include demosaicing and color space conversion. For example, the third image stream may be converted into an image stream of the RGB color space by performing demosaicing on the third image stream, and the image stream of the RGB color space may be converted into an image stream of the YUV color space.

It may be understood that S304 and S306 may be performed simultaneously without a time sequence limitation.

Step S307: Fuse the second image stream and the fourth image stream to obtain a fifth image stream.

Optionally, weighted fusion may be performed on the second image stream and the fourth image stream to obtain the fused fifth image stream.

Optionally, fusion may be performed by using the second image stream as a reference or using the fourth image stream as a reference, to obtain the fused fifth image stream.

The foregoing is an example for description. This application sets no limitation on a fusion algorithm specifically used for fusion.

For example, an example in which an image in the first image stream is obtained by using the image processing method shown in FIG. 5 is used for description.

Optionally, the first image stream includes the first image, and the first image is an image of the first color space. According to the image processing method provided in this embodiment of this application, the first image processing may be performed on the first image to obtain a second image, the second image is an image of the second color space, and the second image stream includes the second image. The second image processing is performed on the first image to obtain the third image, the third image is an image of the first color space, and the third image stream includes the third image. The third image processing is performed on the third image to obtain a fourth image, the fourth image is an image of the second color space, and the fourth image stream includes the fourth image. The second image and the fourth image are fused to obtain a fifth image, and the fifth image stream includes the fifth image.

It should be understood that the first image processing, the second image processing, the third image processing, or the fusion on an image is applicable to descriptions of a same part in step S304 to step S307, and details are not described herein again.

Optionally, definition of the fifth image is higher than definition of the second image.

It should be understood that, when it is determined that the status of the electronic device meets the first preset condition, the first image stream is obtained, and the first image stream includes the first image. Because the first image is an image captured when the ambient brightness of the photographing environment in which the electronic device is located is less than the first preset threshold or captured in the night mode of the camera application, the first image may include some noise. The second image is obtained by performing the first image processing on the first image, and the second image may also include some noise. The fifth image is an image obtained by fusing the second image and the fourth image. Because the fourth image is obtained by performing the third image processing on the third image, the third image is obtained by performing downsampling and image enhancement on the second image. Therefore, the fourth image may be used to compensate definition of the second image, that is, definition of the fused fifth image is higher than the definition of the second image.

Optionally, before the second image processing is performed on the first image, the first image may be stored in a memory of the electronic device. The first image may be obtained from the memory of the electronic device, and the second image processing is performed on the first image to obtain the third image.

In this embodiment of this application, the first image processing and the second image processing may be performed on the first image. The first image processing may not be controlled by a software algorithm, that is, the first image processing may be automatically performed. The second image processing may be controlled by a software algorithm, that is, when an invocation instruction is received, the second image processing may be started. Therefore, the first image may be stored in the memory of the electronic device. After an invocation instruction is received, the first image may be obtained from the memory of the electronic device, and the second image processing is performed on the first image.

Optionally, before the third image processing is performed on the third image, the third image may be stored in the memory of the electronic device. The third image may be obtained from the memory of the electronic device, and the second image processing is performed on the third image to obtain the fourth image.

In this embodiment of this application, the third image processing may be controlled by a software algorithm, that is, when an invocation instruction is received, the third image processing may be started. Therefore, the third image may be stored in the memory of the electronic device. After an invocation instruction is received, the third image may be obtained from the memory of the electronic device, and the third image processing is performed on the third image.

Optionally, the electronic device may include a first image signal processor and a second image signal processor, the first image signal processor is configured to perform the first image processing on the first image to obtain the second image, the second image signal processor is configured to perform the third image processing on the third image to obtain the fourth image, and the method further includes:

obtaining an invocation instruction, where the invocation instruction is used to instruct to run the second image signal processor.

In this embodiment of this application, the electronic device may include the first image signal processor and the second image signal processor. The first image signal processor may always be in a running state, that is, is not controlled by a software algorithm. The second image signal processor may not run until the invocation instruction is obtained, that is, may be controlled by a software algorithm.

Step S308: Display and/or store the fifth image stream.

Optionally, when the electronic device is in the preview state, the fifth image stream may be displayed. Alternatively, when the electronic device is in the preview state, the fifth image stream may be displayed, and a part or all of the fifth image stream may be stored.

For example, the preview state may include a common preview state and a recording preview state. For example, the common preview state means that a preview image is displayed in a viewfinder in real time in a camera application before a photographing control or a video recording control is tapped. Alternatively, the common preview state may mean that a preview image of a video call is displayed in a viewfinder in real time in a video call application. The recording preview state may mean that a preview recorded image is displayed in a viewfinder in a recording interface in real time after a video recording control in a camera application is tapped.

Optionally, when the electronic device is in the recording state, the fifth image stream may be stored.

In this embodiment of this application, when it is determined that the status of the electronic device meets the first preset condition, the first image stream may be obtained. The first image stream may be an image stream of the first color space. The first image processing may be performed on the first image stream to obtain the second image stream of the second color space. The second image processing may be performed on the first image stream to obtain the third image stream of the first color space, and the second image processing may include downsampling and image enhancement. In other words, the third image stream may be a small-sized and quality-enhanced image stream corresponding to the first image stream. The third image processing is performed on the third image stream to obtain the fourth image stream of the second color space. In other words, the fourth image stream is a quality-enhanced image stream compared with the second image stream. The second image stream and the fourth image stream are fused to obtain the fifth image stream. Because the fourth image stream is obtained based on the third image stream, and the third image stream is obtained by performing downsampling and image enhancement on the first image stream, the fourth image stream has higher image quality and lower definition than the second image stream. In this embodiment of this application, the definition of the fourth image stream may be compensated based on the second image stream, and the image quality of the second image stream may be compensated based on the fourth image stream. Therefore, the fifth image stream is obtained by fusing the second image stream and the fourth image stream, and the fifth image stream may have enhanced image quality and a low definition loss, so that image quality of the image stream is improved.

Implementation 1

FIG. 6 is a schematic diagram of an architecture of an image processing method applicable to this application.

As shown in FIG. 6, a system 300 may include an image sensor 310, a first image signal processor 320, a memory 330, a raw-domain algorithm module 340, a second image signal processor 350, a fusion module 360, and a third image signal processor 370.

It should be understood that the first image signal processor 320 may always be in a running state, that is, is not controlled by a software algorithm. The second image signal processor 350 may not run until an invocation instruction is obtained, that is, may be controlled by a software algorithm.

For example, the image sensor 310 is configured to capture an original image or a video.

Optionally, the image processor 310 may be further configured to output the image or the video to the first image signal processor 320 or the memory 330.

For example, in a video recording scenario, the image sensor 310 may capture a raw-domain image stream (an example of a first image stream).

It should be understood that "raw" shown in FIG. 6 may refer to raw color space.

It should be understood that the raw-domain image stream is an image stream of the raw color space, and the image stream of the raw color space means that the image stream is in the raw color space.

For example, the first image signal sensor 320 may be configured to convert the raw-domain image stream captured by the image sensor 310 into an RGB-domain image stream (an example of a second image stream), a YUV-domain image stream, or an image stream of other color space.

It should be understood that RGB/YUV shown in FIG. 6 may represent RGB color space or YUV color space.

It should be understood that the RGB-domain image stream is an image stream of the RGB color space, and the image stream of the RGB color space means that the image stream is in the RGB color space. Similarly, the YUV-domain image stream is an image stream of the YUV color space, and the image stream of the YUV color space means that the image stream is in the YUV color space.

For example, the first image signal processor 320 may convert the raw-domain image stream into the RGB-domain image stream according to a demosaicing algorithm (an example of first image processing). The demosaicing algorithm may be an algorithm for converting a raw-domain image stream of a Bayer array structure into an RGB-domain image stream. For example, sizes of an input image and an output image in the first image signal processor 320 may be the same or different.

In an example, the input image stream of the first image signal processor 320 may be a 4K raw-domain image stream captured by the image sensor 310, the output image of the first image signal processor 320 may be a 4K RGB-domain image stream, and the first image signal processor 320 may perform demosaicing (demosaic) on the 4K raw-domain image stream to obtain the 4K RGB-domain image stream.

In an example, the input image of the first image signal processor 320 may be a 4K raw-domain image stream captured by the image sensor 310, the output image stream of the first image signal processor 320 may be a 2K RGB-domain image stream, and the first image signal processor 320 may perform the following processing.

Step 1: Perform demosaicing on the 4K raw-domain image stream to obtain a 4K RGB-domain image stream.

Step 2: Perform downsampling on the 4K RGB-domain image stream to obtain the 2K RGB-domain image stream.

It should be understood that the first image signal sensor 320 may be configured to perform the related method steps of performing the first image processing on the first image stream to obtain the second image stream of the second color space in FIG. 5.

For example, the image sensor 310 may further transmit the captured image stream to the memory 330, and the memory 330 may be configured to store the image stream captured by the image sensor 310.

For example, the raw-domain algorithm module 340 may obtain, from the memory 330, the image stream captured by the image sensor 310, and perform downsampling and image enhancement on the image stream to obtain a quality-enhanced small-sized image stream.

For example, the raw-domain algorithm module 340 may obtain, from the memory 330, the raw-domain image stream captured by the image sensor 310, perform downsampling on the raw-domain image stream to obtain a size-reduced raw-domain image stream, and perform image enhancement on the size-reduced raw-domain image stream to obtain a quality-enhanced small-sized raw-domain image stream (an example of a third image stream).

For example, an image enhancement algorithm may include but is not limited to one or more of the following algorithms:

a denoising algorithm, a super-resolution algorithm, a deblurring algorithm, a contrast adjustment algorithm, a brightness adjustment algorithm, or a high dynamic range image algorithm.

It should be understood that data may be transmitted between the raw-domain algorithm module 340 and the memory 330. The raw-domain algorithm module 340 may be a software algorithm module. For example, the raw-domain algorithm module 340 may be a module in the camera algorithm library shown in FIG. 2. Alternatively, the raw-domain algorithm module 340 may be a hardware algorithm module. For example, the raw-domain algorithm module 340 may be a module in the camera device shown in FIG. 2.

It should be further understood that the raw-domain algorithm module 340 may be configured to perform the related method steps of performing the second image processing on the first image stream to obtain the third image stream of the first color space in FIG. 5.

In an example, the raw-domain algorithm module 340 may read, from the memory 330, a full-size raw-domain image stream obtained by the image sensor 310, and perform downsampling on the full-size raw-domain image stream (for example, downsampling is performed in a v2h2 manner of weighted averaging of rows and columns spaced horizontally and vertically) to obtain a size-reduced raw-domain image stream. After the size-reduced raw-domain image stream is processed by using a raw-domain image enhancement algorithm, a quality-enhanced small-sized raw-domain image stream is obtained, and the quality-enhanced small-sized raw-domain image stream is output and is stored in the memory 330.

It should be understood that the foregoing describes the downsampling manner by using v2h2 as an example, and downsampling may be performed in any manner. This is not limited in this application.

For example, an image that is input to the first image signal processor 320 may be a raw image stream (for example, a 4K full-size raw-domain image stream) that is captured by the image sensor 310 and that is not processed by using another algorithm. An image that is input to the second image signal processor 350 may be a size-reduced raw-domain image (for example, a 2K raw-domain image) obtained after the raw-domain image stream captured by the image sensor 310 is processed by the raw-domain algorithm module 340.

It should be understood that the second image signal processor 350 may be configured to perform the related method steps of performing the third image processing on the third image stream to obtain the fourth image stream of the second color space in FIG. 5.

Optionally, a data interface problem may exist, and consequently the raw-domain algorithm module 340 cannot directly perform data stream transmission with the second image signal processor 350. Therefore, a quality-enhanced small-sized raw-domain image processed by the raw-domain algorithm module 340 may be transmitted to the second image signal processor 350 through the memory 330.

Optionally, data may be transmitted between the memory 330 and the second image signal processor 350. For example, the second image signal processor 350 may obtain, from the memory 330, an image stream processed by the raw-domain algorithm module 340. Alternatively, when the second image signal processor 350 performs raw-domain algorithm processing on an image stream, the second image signal processor 350 may transmit the image stream to the memory 330, and the raw-domain algorithm module 340 obtains the image stream from the memory 330 and processes the image stream.

For example, the second image signal processor 350 may obtain a quality-enhanced small-sized raw-domain image stream (for example, 2K) from the memory 330, process the quality-enhanced small-sized raw-domain image stream (for example, demosaicing), and output a quality-enhanced small-sized RGB-domain image stream (for example, 2K), or output a quality-enhanced full-size RGB-domain image stream (for example, 4K).

It should be noted that, the foregoing provides description by using an example in which the first image signal processor 320 and the second image signal processor 350 output an RGB-domain image stream (an example of a fourth image stream). The first image signal processor 320 and the second image signal processor 350 may alternatively output a YUV domain image stream or an image stream of other color space. This is not limited in this application.

It should be understood that the RGB domain may refer to RGB color space, and the YUV domain may refer to YUV color space. RGB/YUV shown in FIG. 6 may represent the RGB color space or the YUV color space.

It should be understood that, after the raw-domain algorithm module 340 performs downsampling and image enhancement algorithm processing on a raw-domain image stream, compared with that of a full-size raw-domain image stream, definition of a size-reduced image stream decreases. Therefore, the quality-enhanced small-sized raw-domain image stream that is output by the second image signal processor 350 has lower definition than the image stream that is output by the first image signal processor 320.

For example, the fusion module 360 is configured to fuse the image stream that is output by the first image signal processor 320 and the quality-enhanced small-sized image stream that is output by the second image signal processor 350, to obtain a fused image stream.

It should be understood that the fusion module 360 or the fusion module 360 and the third image signal processor 370 may be configured to perform the related method steps of fusing the second image stream and the fourth image stream to obtain the fifth image stream in FIG. 5.

It should be understood that the first image signal processor 320 outputs an image stream with normal definition, and the second image signal processor 350 outputs an image stream with enhanced image quality and reduced definition. The image stream with normal definition and the image stream with reduced definition are fused, so that definition of the image stream that is output by the second image signal processor 350 can be improved, and a problem of a definition loss in raw-domain downsampling can be resolved. In addition, the image stream that is output by the second image signal processor 350 is an image stream with enhanced image quality. Therefore, through fusion, image quality of the fused image stream can be enhanced, and a definition loss is relatively low.

In an example, weighted fusion may be performed on the image stream that is output by the first image signal processor 320 and the image stream that is output by the second image signal processor 350 to obtain a fused image stream.

In an example, the image stream that is output by the first image signal processor 320 may be used as an image reference, or the image stream that is output by the second image signal processor 350 may be used as an image reference, to obtain a fused image stream.

The foregoing is an example for description. This application sets no limitation on a fusion algorithm specifically used by the fusion module 360.

For example, the third image signal processor 370 is configured to perform YUV-domain or RGB-domain algorithm processing on the fused image stream, to output a preview stream and/or a video stream (an example of a fifth image stream). The preview stream may be used for previewing. The video stream may be used for video storage, playback, and the like.

For example, the image processing method provided in this embodiment of this application may be applied to a preview stream scenario, and a preview image may be displayed in real time by using the image processing method provided in this embodiment of this application. The preview state may include a common preview state and a recording preview state. For example, the common preview state means that a preview image is displayed in a viewfinder in real time in a camera application before a photographing control or a video recording control is tapped. Alternatively, the common preview state may mean that a preview image of a video call is displayed in a viewfinder in real time in a video call application. The recording preview state may mean that a preview recorded image is displayed in a viewfinder in a recording interface in real time after a video recording control in a camera application is tapped.

It should be understood that, in a scenario corresponding to the preview stream shown in FIG. 6, a relatively high requirement is imposed on a delay, that is, an image needs to be processed and a preview image needs to be displayed in an electronic device in a relatively short time. Considering requirements for a low delay and high image quality of a preview stream, because of the high image quality requirement, image enhancement may be usually performed on a raw-domain image obtained by an image sensor. Because of the low delay requirement, when image enhancement is performed on the raw-domain image, image enhancement may be usually performed on a small-sized raw-domain image after downsampling is performed on the raw-domain image captured by the image sensor. However, performing downsampling on the raw-domain image reduces image definition, and consequently, a preview stream cannot simultaneously meet the low delay requirement and the high image quality requirement. In the image processing method provided in this embodiment of this application, the raw-domain algorithm module 340 may be added to perform downsampling and image enhancement on the raw-domain image. The small-sized raw-domain image obtained after the image enhancement may be input to the second image signal processor 350 for image processing. The first image signal processor 320 may directly perform image processing on the obtained raw-domain image, and the fusion module 360 fuses the output image of the first image signal processor 320 and the output image of the second image signal processor 350. The output image of the first image signal processor 320 may compensate definition of the output image of the second image signal processor 350, and the output image of the second image signal processor 350 may compensate image quality of the output image of the first image signal processor 320, so that a preview stream can simultaneously meet the low delay requirement and the high image quality requirement.

It should be further understood that in a video recording scenario at night, denoising needs to be performed on an image in a video because ambient brightness is low and noise of the video is high. Because a scenario corresponding to a preview stream has requirements for a low delay and high image quality, for the high image quality requirement, raw-domain denoising may be usually performed on a raw-domain image obtained by an image sensor. Because of the low delay requirement, when denoising is performed on the raw-domain image, raw-domain denoising may be usually performed on a small-sized raw-domain image after downsampling is performed on the raw-domain image captured by the image sensor. However, performing downsampling on the raw-domain image reduces image definition, and consequently, a preview stream cannot simultaneously meet the low delay requirement and the high image quality requirement. In the image processing method provided in this embodiment of this application, the raw-domain algorithm module 340 may be added to perform downsampling and raw-domain image denoising on the raw-domain image. The small-sized raw-domain image obtained after the denoising may be input to the second image signal processor 350 for image processing. The first image signal processor 320 may directly perform image processing on the obtained raw-domain image, and the fusion module 360 fuses the output image of the first image signal processor 320 and the output image of the second image signal processor 350. The output image of the first image signal processor 320 may compensate definition of the output image of the second image signal processor 350, and the output image of the second image signal processor 350 may compensate image quality of the output image of the first image signal processor 320, so that a preview stream can simultaneously meet the low delay requirement and the high image quality requirement.

Optionally, the method shown in FIG. 6 is applicable to video processing, and is applicable to image processing.

For example, the YUV-domain or RGB-domain algorithm performed by the third image signal processor 370 may include but is not limited to:
global tone mapping (global tone mapping, GTM), local tone mapping (local tone mapping, LTM), a color correction matrix (color correction matrix, CCM), denoising (noise reduce, NR), and the like.

The global tone mapping is used to resolve a problem that grayscale value distribution of a high dynamic range image is uneven. The local tone mapping refers to using different tone mapping curves in different regions of an image. The color correction matrix is used to calibrate accuracy of a color other than white. The denoising is used to remove noise (for example, Gaussian noise) from an image, so that the image is smooth.

It should be noted that the first image signal processor 320 and the second image signal processor 350 may be different image signal processors, or may be different parts of a same image signal processor. For example, an image signal processor may include two parts. One part performs raw-domain algorithm processing, and is represented as ISP-part1. The other part performs YUV-domain and/or RGB-domain algorithm processing, and is represented as ISP-part2. The first image signal processor 320 may refer to first part1. The second image signal processor 350 may refer to second part1. First part1 and second part1 are different part1 in the image signal processor. The third image signal processor 370 may refer to ISP-part2. The third image signal processor 370 and the first image signal processor 320 may be different parts in a same image signal processor, or the third image signal processor 370 and the second image signal processor 350 may be different parts in a same image signal processor.

It should be understood that the foregoing describes image processing on an image stream by using the system architecture shown in FIG. 6. Similarly, the system architecture shown in FIG. 6 also performs image processing on an image.

For example, the raw-domain image stream captured by the image sensor 310 includes first image, and the first image is a raw image. The first image signal processor 320 processes raw image to obtain an RGB image or a YUV image (an example of a second image). The first image may be stored in the memory 330. The raw-domain algorithm module obtains the first image from the memory 330, and performs downsampling and image enhancement on the first image to obtain a quality-enhanced small-sized raw-domain image (an example of a third image). The raw-domain algorithm module 340 and the memory 330 may transmit data to each other. The quality-enhanced small-sized raw-domain image may be stored in the memory 330. The second image signal processor 350 may obtain the quality-enhanced small-sized raw-domain image from the memory 330, and perform image processing on the quality-enhanced small-sized raw-domain image to obtain a quality-enhanced RGB image or a quality-enhanced YUV image (an example of a fourth image). The fusion module 360 may fuse an RGB image and the quality-enhanced RGB image to obtain a fused image, or the fusion module 360 may fuse a YUV image and the quality-enhanced YUV image to obtain a fused image. The third image signal processor 370 may perform a YUV-domain image processing algorithm or an RGB-domain image processing algorithm on the fused image to obtain a preview image (an example of a fifth image). The image may be used for previewing or may be stored in an electronic device for playback.

It should be understood that when the system architecture shown in FIG. 6 performs image processing on an image, related steps and methods for performing image processing on an image stream are applicable, and details are not described herein again.

In embodiments of this application, when it is determined that a status of an electronic device meets a first preset condition, a first image stream may be obtained. The first image stream may be an image stream of first color space. First image processing may be performed on the first image stream to obtain a second image stream of second color space. Second image processing may be performed on the first image stream to obtain a third image stream of the first color space, and the second image processing may include downsampling and image enhancement. In other words, the third image stream may be a small-sized and quality-enhanced image stream corresponding to the first image stream. Third image processing is performed on the third image stream to obtain a fourth image stream of the second color space. In other words, the fourth image stream is a quality-enhanced image stream compared with the second image stream. The second image stream and the fourth image stream are fused to obtain a fifth image stream. Because the fourth image stream is obtained based on the third image stream, and the third image stream is obtained by performing downsampling and image enhancement on the first image stream, the fourth image stream has higher image quality and lower definition than the second image stream. In embodiments of this application, the definition of the fourth image stream may be compensated based on the second image stream, and the image quality of the second image stream may be compensated based on the fourth image stream. Therefore, the fifth image stream is obtained by fusing the second image stream and the fourth image stream, and the fifth image stream may have enhanced image quality and a low definition loss. This resolves a problem of a definition loss caused by downsampling on a raw-domain image stream, and improves image definition.

Implementation 2

In an example, when a second image signal processor can directly transmit a data stream with a raw-domain algorithm module, data stream transmission may not require a memory, as shown in FIG. 7.

FIG. 7 is a schematic diagram of an architecture of an image processing method applicable to this application.

As shown in FIG. 7, a system 400 may include an image sensor 410, a first image signal processor 420, a raw-domain algorithm module 430, a second image signal processor 440, a fusion module 450, and a third image signal processor 460. As shown in FIG. 7, the raw-domain algorithm module 430 may directly transmit a data stream to the second image signal processor 440.

It should be noted that for a part in FIG. 7 that is the same as that in FIG. 6, refer to the descriptions in FIG. 6. Details are not described herein again.

Optionally, in this embodiment of this application, according to implementation 1 and implementation 2, image definition can be improved when downsampling is performed on a raw-domain image stream. In addition, in this embodiment of this application, to improve image quality and reduce power consumption of an electronic device, implementation 3 or implementation 4 may be further used. For example, a first-branch image processing procedure (an example of first target processing) and/or a second-branch image processing procedure (an example of second target processing) may be determined based on ambient brightness of a photographing environment in which the electronic device is located. The first-branch image processing procedure may include an image processing procedure performed by the image sensor 310, the first image signal processor 320, the fusion module 360, and the third image signal processor 370 shown in FIG. 6. The second-branch image processing procedure may include an image processing procedure performed by the image sensor 310, the memory 330, the raw-domain algorithm module 340, the second image signal processor 350, the fusion module 360, and the third image signal processor 370 shown in FIG. 6.

Implementation 3

Optionally, in an example, the fusion module 360 shown in FIG. 6 may be configured to determine, based on ambient brightness of a photographing environment in which an electronic device is located, to use the first-branch image processing procedure and/or the second-branch image processing procedure. For example, when the photographing environment in which the electronic device is located is a dark environment, the fusion module 360 may perform the first-branch image processing procedure on a raw image stream captured by the image sensor 310. When the photographing environment in which the electronic device is located is a medium-brightness or low-brightness environment, the fusion module 360 may fuse an image stream obtained based on the first-branch image processing procedure and an image stream obtained based on the second-branch image processing procedure. When the photographing environment in which the electronic device is located is a bright environment, the fusion module 360 may perform the second-branch image processing procedure on a raw image stream captured by the image sensor 310.

Optionally, when the fusion module 360 determines to use the first-branch image processing procedure, the fusion module 360 may transmit, to the third image signal processor 370, only an image stream that is output by the first image signal processor 320. In other words, when the fusion module 360 determines to use the first-branch image processing procedure, an image stream that is output by the second image signal processor 350 may not need to be transmitted to the third image signal processor 370.

Optionally, when the fusion module 360 determines to use the second-branch image processing procedure, the fusion module 360 may transmit, to the third image signal processor 370, only an image stream that is output by the second image signal processor 320. In other words, when the fusion module 360 determines to use the second-branch image processing procedure, an image stream that is output by the first image signal processor 320 may not need to be transmitted to the third image signal processor 370.

Optionally, when the fusion module 360 determines to use the first-branch image processing procedure and the second-branch image processing procedure, the fusion module 360 may fuse an image stream that is output by the first image signal processor 320 and an image stream that is output by the second image signal processor 350, and transmit a fused image stream to the third image signal processor 370.

Optionally, the fusion module 360 may obtain a brightness-related parameter of the electronic device, and determine, based on the brightness-related parameter, ambient brightness of a photographing environment in which the electronic device is currently located. For example, the brightness-related parameter may include but is not limited to one or more of ISO, LV, or lux.

It should be noted that collection of the parameter lux may require that the electronic device has an additional component (for example, a professional illuminometer). Therefore, if the electronic device does not include the component for collecting the parameter lux, the fusion module 360 may determine the ambient brightness of the photographing environment based on the parameter ISO or the parameter LV. If the electronic device includes the component for collecting the parameter lux, the fusion module 360 may determine the ambient brightness of the photographing environment based on one or more of the parameter ISO, the parameter LU, or the parameter lux. This is not limited in this application.

Optionally, an example in which the fusion module 360 obtains the parameter ISO, and determines, based on the parameter ISO, to use the first-branch image processing procedure and/or the second-branch image processing procedure is used for description.

Case 1

If an ISO value of the electronic device is less than or equal to a second preset threshold, it may indicate that the ambient brightness of the photographing environment in which the electronic device is located is relatively high. Because the ambient brightness is relatively high, image quality (for example, definition of the image, image noise, or detail information in the image) of the image stream that is output by the first image signal processor 320 is good. Therefore, the fusion module 360 may transmit, to the third image signal processor 370 for image processing, the image stream that is output by the first image signal processor 320, to obtain a preview stream and/or a video stream.

It should be understood that the image quality of the image stream captured by the electronic device is related to the ambient brightness of the photographing environment in which the electronic device is located. When the photographing environment in which the electronic device is located is a high-brightness photographing environment, the image quality of the image stream processed by the first image signal processor 320 is good. Therefore, when the photographing environment in which the electronic device is located is a high-brightness photographing environment, only the first-branch image processing procedure may be run.

Case 2

If an ISO value of the electronic device is less than or equal to a third preset threshold, it may indicate that the ambient brightness of the photographing environment in which the electronic device is located is relatively low (for example, a night scenario). Because the ambient brightness is relatively low, image quality (for example, definition of the image, image noise, or detail information in the image) of the image stream that is output by the first image signal processor 320 is poor. Therefore, the fusion module 360 may transmit, to the third image signal processor 370 for image processing, the image stream that is output by the second image signal processor 320, to obtain a preview stream and/or a video stream.

It should be understood that the image quality of the image stream captured by the electronic device is related to the ambient brightness of the photographing environment in which the electronic device is located. When the photographing environment in which the electronic device is located is a dark photographing environment, the image quality of the image stream processed by the first image signal processor 320 is poor. In this case, if the image stream that is output by the first image signal processor 320 and the image stream that is output by the second image signal processor 350 are fused, image quality of the fused image stream is also poor. Therefore, when the photographing environment in which the electronic device is located is a dark photographing environment, only the second-branch image processing procedure may be run.

Case 3

If an ISO value of the electronic device is greater than a second preset threshold and less than a third preset threshold, it may indicate that the ambient brightness of the photographing environment in which the electronic device is located is medium or low. In this case, the fusion module 360 may fuse the image stream that is output by the first image signal processor 320 and the image stream that is output by the second image signal processor 350 to obtain the fused image stream, and transmit the fused image stream to the third image signal processor 370 for image processing to obtain a preview stream and/or a video stream.

It should be understood that the image quality of the image stream captured by the electronic device is related to the ambient brightness of the photographing environment in which the electronic device is located. When the photographing environment in which the electronic device is located is a medium-brightness or low-brightness environment, the first image signal processor 320 outputs an image stream with normal definition, and the second image signal processor 350 outputs an image stream with enhanced image quality and reduced definition. The image stream with normal definition and the image stream with reduced definition are fused, so that definition of the image stream that is output by the second image signal processor 350 can be improved, and a problem of a definition loss in raw-domain downsampling can be resolved. In addition, the image stream that is output by the second image signal processor 350 is an image stream with enhanced image quality. Therefore, through fusion, image quality of the fused image stream can be enhanced, and a definition loss is relatively low.

Optionally, an example in which the second preset threshold is 3200 and the third preset threshold is 6400 is used for description. When the ISO value of the electronic device is less than or equal to 3200, the fusion module 360 is configured to transmit, to the third image signal processor 370 for image processing, the image stream that is output by the first image signal processor 320, to obtain a preview stream and/or a video stream. When the ISO value of the electronic device is greater than 3200 and less than 6400, the fusion module 360 is configured to fuse the image stream that is output by the first image signal processor 320 and the image stream that is output by the second image signal processor 350 to obtain the fused image stream, and transmit the fused image stream to the third image signal processor 370 for image processing to obtain a preview stream and/or a video stream. When the ISO value of the electronic device is greater than or equal to 6400, the fusion module 360 is configured to transmit, to the third image signal processor 370 for image processing, the image stream that is output by the second image signal processor 350, to obtain a preview stream and/or a video stream.

For example, if the fusion module 360 is configured to fuse the image stream that is output by the first image signal processor 320 and the image stream that is output by the second image signal processor 350, the following fusion manner may be used:

$$ I3 = X1 * I1 + (1 - X1) * I2. $$

Herein, I3 represents the fused image stream, I1 represents the image stream that is output by the first image signal processor 320, I2 represents the image stream that is output by the second image signal processor 350, and X1 represents a fusion weight coefficient.

Optionally, a value of the foregoing fusion weight coefficient X1 is related to the ambient brightness of the photographing environment in which the electronic device is located. For example, higher ambient brightness indicates a larger value of the fusion weight coefficient X1, and lower ambient brightness indicates a smaller value of the fusion weight coefficient X1.

It should be understood that the foregoing is an example of fusion, and another fusion manner may alternatively be used. This is not limited in this application.

Optionally, in an example, if the ISO value of the electronic device is less than or equal to a fourth preset threshold, the fusion module 360 may perform the first-branch image processing procedure on the raw image stream captured by the image sensor 310. If the ISO value of the electronic device is greater than a fourth preset threshold, the fusion module 360 may perform the second-branch image processing procedure on the raw image stream captured by the image sensor 310.

For example, that the fourth preset threshold is 6400 is used as an example for description. If the ISO value of the electronic device is less than or equal to 6400, the fusion module 360 may transmit, to the third image signal processor 370 for image processing, only the image stream that is output by the first image signal processor 320. If the ISO value of the electronic device is greater than 6400, the fusion module 360 may transmit, to the third image signal processor 370 for image processing, only the image stream that is output by the second image signal processor 350.

It should be understood that the foregoing is described by using an example in which the ISO value of the electronic device is obtained. In this embodiment of this application, the ambient brightness of the photographing environment may alternatively be determined based on one or more of the LV value or the lux value, and a to-be-used image processing procedure is determined based on the ambient brightness of the photographing environment.

According to implementation 3, the fusion module 360 may be configured to obtain the brightness-related parameter to determine the ambient brightness of the photographing environment, and determine, based on the ambient brightness, to use the first-branch image processing procedure and/or the second-branch image processing procedure. Optionally, to reduce power consumption of the electronic device, there may further be a decision module between the image sensor 310 and the first image signal processor 320, and the decision module may be configured to obtain the brightness-related parameter to determine the ambient brightness of the photographing environment, and determine, based on the ambient brightness, to use the first-branch image processing procedure and/or the second-branch image processing procedure.

It should be noted that, in addition to the foregoing descriptions, for a part in implementation 3 that is the same as that in implementation 1, refer to related descriptions in implementation 1, and details are not described herein again.

In this embodiment of this application, as shown in FIG. 6, the fusion module 360 may determine, based on the ambient brightness of the photographing environment in which the electronic device is located, to perform the first-branch image processing procedure and/or the second-branch image processing procedure on the raw image stream. Because the image quality of the raw image stream captured by the image sensor 310 is related to the ambient brightness of the photographing environment in which the electronic device is located, different image processing procedures may be performed on the raw image stream based on the ambient brightness, to improve image quality. In addition, in this application, there is no need to perform a same target operation on the raw image stream in different ambient brightness, that is, an image processing procedure on the raw image stream may be adjusted in real time based on the ambient brightness. Therefore, power consumption of the electronic device can be reduced to some extent.

Implementation 4

Optionally, in an example, there may further be a decision module between the image sensor 310 and the first image signal processor 320 shown in FIG. 6. The decision module may determine, based on ambient brightness of a photographing environment in which an electronic device is located, to perform the first-branch image processing procedure and/or the second-branch image processing procedure on a raw image stream captured by the image sensor 310. For example, when the photographing environment in which the electronic device is located is a dark environment, the decision module may determine to perform the first-branch image processing procedure on the raw image stream captured by the image sensor 310. When the photographing environment in which the electronic device is located is a medium-brightness or low-brightness environment, the decision module may determine to perform the first-branch image processing procedure and the second-branch image processing procedure on the raw image stream captured by the image sensor 310. When the photographing environment in which the electronic device is located is a bright environment, the decision module may determine to perform the second-branch image processing procedure on the raw image stream captured by the image sensor 310.

Optionally, when the decision module determines to use the first-branch image processing procedure, the fusion module 360 may transmit, to the third image signal processor 370, only an image stream that is output by the first image signal processor 320. In other words, when the decision module determines to use the first-branch image processing procedure, an image stream that is output by the second image signal processor 350 may not need to be transmitted to the third image signal processor 370.

Optionally, when the decision module determines to use the second-branch image processing procedure, the fusion module 360 may transmit, to the third image signal processor 370, only an image stream that is output by the second image signal processor 320. In other words, when the decision module determines to use the second-branch image processing procedure, an image stream that is output by the first image signal processor 320 may not need to be transmitted to the third image signal processor 370.

Optionally, when the decision module determines to use the first-branch image processing procedure and the second-branch image processing procedure, the fusion module 360 may fuse an image stream that is output by the first image signal processor 320 and an image stream that is output by the second image signal processor 350, and transmit a fused image stream to the third image signal processor 370.

Optionally, the image processor 310 may be further configured to output an image or a video to the decision module.

Optionally, the decision module may obtain a brightness-related parameter of a camera module, and determine, based on the brightness-related parameter, ambient brightness of a photographing environment in which the electronic device is currently located. For example, the brightness-related parameter may include but is not limited to one or more of ISO, LV, or lux.

It should be noted that collection of the parameter lux may require that the electronic device has an additional component (for example, a professional illuminometer). Therefore, if the electronic device does not include the component for collecting the parameter lux, the decision module may determine the ambient brightness of the photographing environment based on the parameter ISO or the parameter LV. If the electronic device includes the component for collecting the parameter lux, the decision module may determine the ambient brightness of the photographing environment based on one or more of the parameter ISO, the parameter LU, or the parameter lux. This is not limited in this application.

Optionally, an example in which the decision module obtains the parameter ISO, and determines, based on the parameter ISO, to use the first-branch image processing procedure and/or the second-branch image processing procedure is used for description.

Case 1

If an ISO value of the electronic device is less than or equal to a second preset threshold, it may indicate that the ambient brightness of the photographing environment in which the electronic device is located is relatively high. Because the ambient brightness is relatively high, image quality (for example, definition of the image, image noise, or detail information in the image) of the image stream that is output by the first image signal processor 320 is good. Therefore, the decision module may transmit, to the third image signal processor 370 for image processing, the image stream that is output by the first image signal processor 320, to obtain a preview stream and/or a video stream.

Optionally, the decision module may obtain the raw-domain image stream captured by the image sensor 310, and transmit the raw-domain image stream to the first image signal processor 320. The fusion module 360 may transmit, to the third image signal processor 370 for image processing, the image stream that is output by the first image signal processor 320, to obtain a preview stream and/or a video stream.

It should be understood that the image quality of the image stream captured by the electronic device is related to the ambient brightness of the photographing environment in which the electronic device is located. When the photographing environment in which the electronic device is located is a high-brightness photographing environment, the image quality of the image stream processed by the first image signal processor 320 is good. Therefore, when the photographing environment in which the electronic device is located is a high-brightness photographing environment, the decision module may determine to run the first-branch image processing procedure.

Case 2

If an ISO value of the electronic device is less than or equal to a third preset threshold, it may indicate that the ambient brightness of the photographing environment in which the electronic device is located is relatively low (for example, a night scenario). Because the ambient brightness is relatively low, image quality (for example, definition of the image, image noise, or detail information in the image) of the image stream that is output by the first image signal processor 320 is poor. Therefore, the decision module may transmit, to the third image signal processor 370 for image processing, the image stream that is output by the second image signal processor 320, to obtain a preview stream and/or a video stream.

Optionally, the decision module may obtain the raw-domain image stream captured by the image sensor 310, and transmit the raw-domain image stream to the memory 330. The raw-domain algorithm module 340 may obtain, from the memory 330, the image stream captured by the image sensor 310, and perform downsampling and image enhancement on the image stream to obtain a quality-enhanced small-sized image stream.

Optionally, the raw-domain algorithm module 340 may transmit the quality-enhanced small-sized image stream to the memory 330. Data may be transmitted between the memory 330 and the second image signal processor 350. The fusion module 360 may transmit, to the third image signal processor 370 for image processing, a processed image stream that is output by the second image signal processor 350, to obtain a preview stream and/or a video stream.

It should be understood that the image quality of the image stream captured by the electronic device is related to the ambient brightness of the photographing environment in which the electronic device is located. When the photographing environment in which the electronic device is located is a dark photographing environment, the image quality of the image stream processed by the first image signal processor 320 is poor. In this case, if the image stream that is output by the first image signal processor 320 and the image stream that is output by the second image signal processor 350 are fused, image quality of the fused image stream is also poor. Therefore, when the photographing environment in which the electronic device is located is a dark photographing environment, the decision module may determine to run the second-branch image processing procedure.

Case 3

If an ISO value of the electronic device is greater than a second preset threshold and less than a third preset threshold, it may indicate that the ambient brightness of the photographing environment in which the electronic device is located is medium or low. In this case, the decision module may fuse the image stream that is output by the first image signal processor 320 and the image stream that is output by the second image signal processor 350 to obtain the fused image stream, and transmit the fused image stream to the third image signal processor 370 for image processing to obtain a preview stream and/or a video stream.

Optionally, the decision module may obtain the raw-domain image stream captured by the image sensor 310, and the decision module may transmit the raw image stream to the first image signal processor 320 to perform the first-branch image processing procedure. In addition, the decision module may be further configured to transmit the raw image stream to the memory 330, to perform the second-branch image processing procedure. The fusion module 360 is configured to fuse the image stream that is output by the first image signal processor 320 and the image stream that is output by the second image signal processor 350 to obtain a fused image stream, and transmit the fused image stream to the third image signal processor 370 for image processing to obtain a preview stream and/or a video stream.

It should be understood that the image quality of the image stream captured by the electronic device is related to the ambient brightness of the photographing environment in which the electronic device is located. When the photographing environment in which the electronic device is located is a medium-brightness or low-brightness environment, the first image signal processor 320 outputs an image stream with normal definition, and the second image signal processor 350 outputs an image stream with enhanced image quality and reduced definition. The image stream with normal definition and the image stream with reduced definition are fused, so that definition of the image stream that is output by the second image signal processor 350 can be improved, and a problem of a definition loss in raw-domain downsampling can be resolved. In addition, the image stream that is output by the second image signal processor 350 is an image stream with enhanced image quality. Therefore, through fusion, image quality of the fused image stream can be enhanced, and a definition loss is relatively low.

It should be further understood that, in the foregoing case 1 or case 2, that is, when only one of the branches of the image processing procedure in FIG. 6 is run, the fusion module 360 is configured to transmit an image stream, for example, transmit the image stream that is output by the first image signal processor 320, or transmit the image stream that is output by the second image signal processor 350. In the foregoing case 3, that is, when two branches of the image processing procedure in FIG. 6 are run, the fusion module 360 is configured to fuse the image stream that is output by the first image signal processor 320 and the image stream that is output by the second image signal processor 350.

Optionally, when the decision module determines to perform the first-branch image processing procedure and the second-branch image processing procedure on the raw image stream captured by the image sensor 310, the fusion module 360 is configured to fuse the image stream that is output by the first image signal processor 320 and the image stream that is output by the second image signal processor 350. For example, the fusion module 360 may use the following fusion manner:

$$I3 = X1 * I1 + (1 - X1) * I2.$$

Herein, I3 represents the fused image stream, I1 represents the image stream that is output by the first image signal processor 320, I2 represents the image stream that is output by the second image signal processor 350, and X1 represents a fusion weight coefficient.

Optionally, a value of the foregoing fusion weight coefficient X1 is related to the ambient brightness of the photographing environment in which the electronic device is located. For example, higher ambient brightness indicates a larger value of the fusion weight coefficient X1, and lower ambient brightness indicates a smaller value of the fusion weight coefficient X1.

It should be understood that the foregoing is an example of fusion, and another fusion manner may alternatively be used. This is not limited in this application.

Optionally, an example in which the second preset threshold is 3200 and the third preset threshold is 6400 is used for description. When the ISO value of the electronic device is less than or equal to 3200, the decision module may determine to run the first-branch image processing procedure. When the ISO value of the electronic device is greater than 3200 and less than 6400, the decision module may determine to run a dual-branch image processing procedure including the first-branch image processing procedure and the second-branch image processing procedure. When the ISO value of the electronic device is greater than or equal to 6400, the decision module may determine to run the second-branch image processing procedure.

Optionally, in an example, if the ISO value of the electronic device is less than or equal to a fourth preset threshold, the decision module may determine to perform the first-branch image processing procedure on the raw image stream captured by the image sensor 310. In this case, the fusion module 360 may transmit, to the third image signal processor 370, only the image stream that is output by the first image signal processor 320. If the ISO value of the electronic device is greater than a fourth preset threshold, the decision module may determine to perform the second-branch image processing procedure on the raw image stream captured by the image sensor 310. In this case, the fusion module 360 may transmit, to the third image signal processor 370, only the image stream that is output by the second image signal processor 350.

For example, the fourth preset threshold is 6400. If the ISO value of the electronic device is less than or equal to 6400, the decision module may determine to run the first-branch image processing procedure. If the ISO value of the electronic device is greater than 6400, the decision module may determine to run the second-branch image processing procedure.

It should be noted that, in implementation 3, the first-branch image processing procedure and the second-branch image processing procedure need to be run, and the fusion module 360 determines to transmit, to the third image signal processor 360 for image processing, the image stream that is output by the first image signal processor 320 and/or the image stream that is output by the second image signal processor. However, in implementation 4, the decision module may determine, based on the brightness-related parameter, the ambient brightness of the photographing environment in which the electronic device is located, and determine, based on the ambient brightness in real time, to run a single-branch image processing procedure (for example, run the first-branch image processing procedure or the second-branch image processing procedure), or to run a dual-branch image processing procedure (for example, run the first-branch image processing procedure and the second-branch image processing procedure). Therefore, compared with the image processing method in implementation 3, the image processing method in implementation 4 can effectively reduce power consumption of the electronic device while ensuring image quality.

It should be noted that, in addition to the foregoing descriptions, for a part in implementation 4 that is the same as that in implementation 1, refer to related descriptions in implementation 1, and details are not described herein again.

Optionally, in implementation 3 and implementation 4, the first image signal processor 320 and the second image signal processor 350 may be mutually independent image signal processors. In addition, the first image signal processor 320 or the second image signal processor 350 may be separately controlled to run or to stop running.

Optionally, the foregoing uses the architecture shown in FIG. 6 as an example to describe implementation 3 and implementation 4. Similarly, the foregoing implementation 3 and implementation 4 are also applicable to a system shown in FIG. 7.

Optionally, in the system 400 shown in FIG. 7, a fusion module 450 may be configured to determine, based on ambient brightness of a photographing environment in which an electronic device is located, to perform the first-branch image processing procedure and/or the second-branch image processing procedure on a raw image stream captured by an image sensor 410. For example, for a specific implementation, refer to related descriptions of implementation 3, and details are not described herein again.

Optionally, in the system 400 shown in FIG. 7, there may be a decision module between the image sensor 410 and a first image signal processor 420. The decision module may determine, based on the ambient brightness of the photographing environment in which the electronic device is located, to perform the first-branch image processing procedure and/or the second-branch image processing procedure on the raw image stream captured by the image sensor 410. For example, for a specific implementation, refer to related descriptions of implementation 4, and details are not described herein again.

It should be noted that for a part in FIG. 7 that is the same as that in FIG. 6, refer to the descriptions in FIG. 6. Details are not described herein again.

In this embodiment of this application, there may be the decision module between the image sensor 410 and the first image signal processor 420 shown in FIG. 7. The decision module may determine, based on the ambient brightness of the photographing environment in which the electronic device is located, to perform the first-branch image processing procedure and/or the second-branch image processing procedure on the raw image stream. Because the image quality of the raw image stream captured by the image sensor 410 is related to the ambient brightness of the photographing environment in which the electronic device is located, different image processing procedures may be performed on the raw image stream based on the ambient brightness, to improve image quality. In addition, in this application, there is no need to perform a same target operation on the raw image stream in different ambient brightness, that is, an image processing procedure on the raw image stream may be adjusted in real time based on the ambient brightness. Therefore, power consumption of the electronic device can be reduced to some extent.

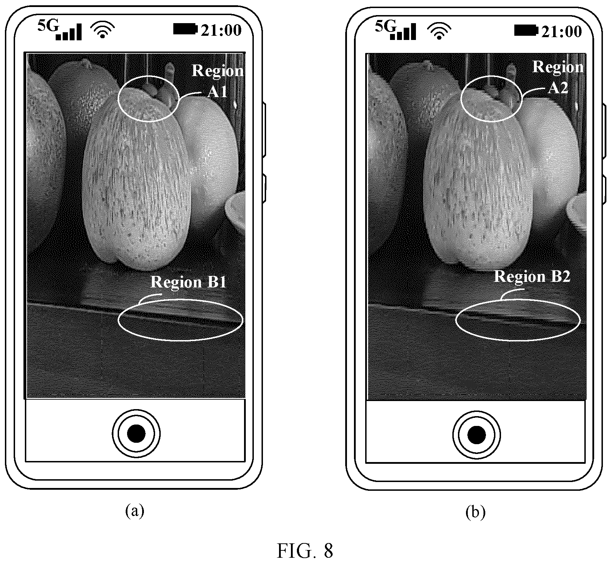

FIG. 8 is a schematic diagram of an effect of an image processing method according to an embodiment of this application.

As shown in FIG. 8, (a) in FIG. 8 is an output image obtained by using the image processing method in embodiments of this application, and (b) in FIG. 8 is an output image obtained in a binning manner of v2h2 after denoising is performed on a raw-domain image in the conventional technology. Compared with the output image shown in (a) in FIG. 8, the output image shown in (b) in FIG. 8 has lower definition. For example, a region A1 shown in (a) in FIG. 8 has higher definition than a region A2 shown in (b) in FIG. 8, and a region B1 shown in (a) in FIG. 8 has higher definition than a region B2 shown in (b) in FIG. 8. Therefore, according to the image processing method provided in embodiments of this application, image definition can be improved when raw-domain denoising is performed on an image, compared with that in an existing solution.

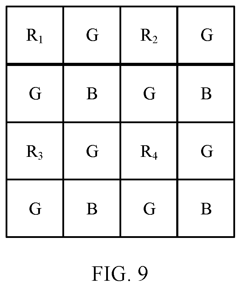

It should be noted that binning is an image read mode, and may refer to combining adjacent pixels into one pixel. For example, binning may combine n×n pixels into one pixel. For example, binning may combine 3×3 adjacent pixels into one pixel. To be specific, colors of the 3×3 adjacent pixels are presented in a form of one pixel. The binning manner of v2h2 is a binning manner in which rows and columns are spaced horizontally and vertically. As shown in FIG. 9, for an image in a Bayer format, the binning manner of v2h2 is used. For an R pixel, the R pixel may be obtained by performing weighted averaging on $R_1$, $R_2$, $R_3$, and $R_4$.

In an example, a night mode may be enabled in a camera application on an electronic device. In a scenario in which the electronic device recognizes that an amount of entering light is relatively small in a current photographing environment, image processing is performed, according to the image processing method provided in embodiments of this application, on a raw-domain image stream captured by a sensor, to output a preview stream or a video stream obtained after denoising.

FIG. 10(a) and FIG. 10(b) show a graphical user interface (graphical user interface, GUI) of an electronic device.

A GUI shown in FIG. 10(a) may be a display interface of a camera application in a video mode, and the display interface may include a photographing interface 510. The photographing interface 510 may include a viewfinder 511 and a control. For example, the viewfinder 511 may include a control 512 used to indicate video recording and a control 513 used to indicate setting. An operation of tapping the control 513 by a user is detected, and a setting interface is displayed in response to the user operation, as shown in FIG. 10(b). The setting interface includes a night mode 514, and if it is detected that the user taps the night mode 514, the electronic device enables the night mode. After the electronic device enables the night mode, image processing may be performed, according to the image processing method provided in embodiments of this application, on an image stream captured by the electronic device.

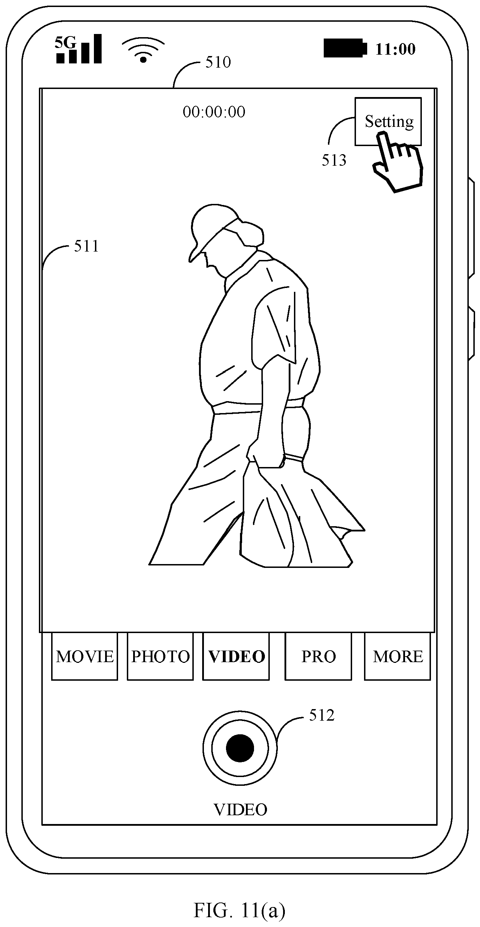

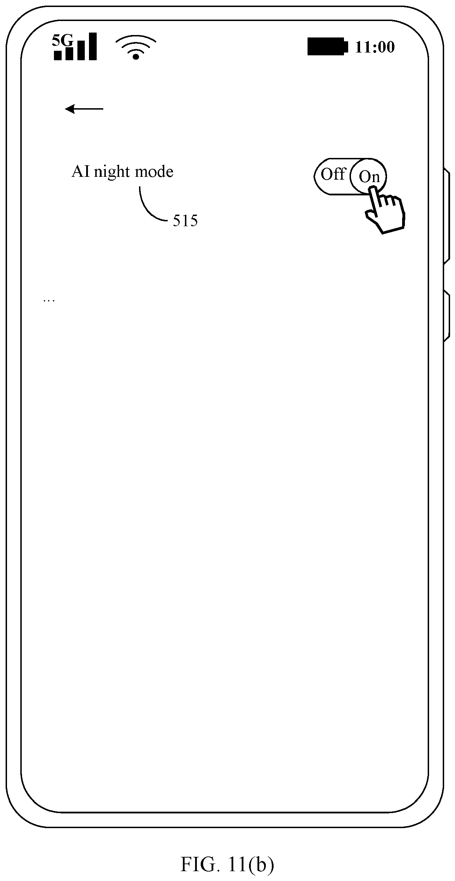

In an example, a photographing interface 510 shown in FIG. 11(a) may include a control 513 used to indicate setting. An operation of tapping the control 513 by a user is detected, and a setting interface is displayed in response to the user operation, as shown in FIG. 11(b). The setting interface includes an artificial intelligence (artificial intelligence, AI) night mode 515. If it is detected that the user enables the AI night mode 515, the electronic device enables the AI night mode. After the user enables the AI night mode, the user may not need to choose to enable the night mode manually. To be specific, the electronic device may automatically identify a dark scenario based on an amount of entering light in the photographing scenario, and automatically enable the night mode in the dark scenario. After the night mode is enabled, an obtained image stream may be processed by using the image processing method provided in embodiments of this application, to obtain a processed image stream.

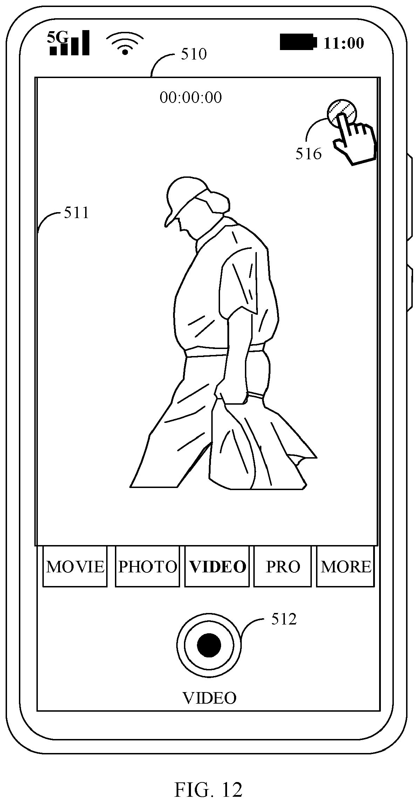

In an example, as shown in FIG. 12, in a video recording mode, the photographing interface 510 may further include a control 516, and the control 516 is used to indicate to enable/disable the night mode. After the electronic device detects an operation that the user taps the control 516, the electronic device may enable the night mode. Image processing is performed, by using the image processing method provided in embodiments of this application, on the image stream captured by the electronic device.

In embodiments of this application, when it is determined that a status of an electronic device meets a first preset condition, a first image stream may be obtained. The first image stream may be an image stream of first color space. First image processing may be performed on the first image stream to obtain a second image stream of second color space. Second image processing may be performed on the first image stream to obtain a third image stream of the first color space, and the second image processing may include downsampling and image enhancement. In other words, the third image stream may be a small-sized and quality-enhanced image stream corresponding to the first image stream. Third image processing is performed on the third image stream to obtain a fourth image stream of the second color space. In other words, the fourth image stream is a quality-enhanced image stream compared with the second image stream. The second image stream and the fourth image stream are fused to obtain a fifth image stream. Because the fourth image stream is obtained based on the third image stream, and the third image stream is obtained by performing downsampling and image enhancement on the first image stream, the fourth image stream has higher image quality and lower definition than the second image stream. In embodiments of this application, the definition of the fourth image stream may be compensated based on the second image stream, and the image quality of the second image stream may be compensated based on the fourth image stream. Therefore, the fifth image stream is obtained by fusing the second image stream and the fourth image stream, and the fifth image stream may have enhanced image quality and a low definition loss. This resolves a problem of a definition loss caused by downsampling on a raw-domain image stream, and improves image definition.

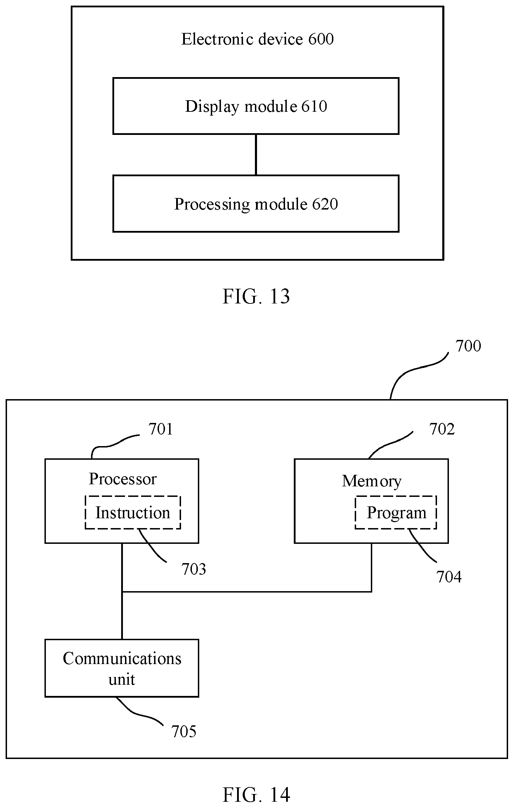

The foregoing describes in detail the image processing method in embodiments of this application with reference to FIG. 1 to FIG. 12. The following describes apparatus embodiments of this application in detail with reference to FIG. 13 and FIG. 14. It should be understood that an apparatus in embodiments of this application may perform the foregoing methods in embodiments of this application. In other words, for a specific working process of the following products, refer to a corresponding process in the foregoing method embodiments.

FIG. 13 is a schematic diagram of a structure of an electronic device according to an embodiment of this application. The electronic device 600 includes a display module 610 and a processing module 620.

The display module 610 is configured to display a first interface, where the first interface is a preview interface or a recording interface. The processing module 620 is configured to: determine that a status of the electronic device meets a first preset condition; obtain a first image stream, where the first image stream is an image stream of first color space; perform first image processing on the first image stream to obtain a second image stream of second color space; perform second image processing on the first image stream to obtain a third image stream of the first color space, where the second image processing includes downsampling and image enhancement; perform third image processing on the third image stream to obtain a fourth image stream of the second color space; fuse the second image stream and the fourth image stream to obtain a fifth image stream; and display and/or store the fifth image stream.

Optionally, in an embodiment, the first image stream includes a first image, the first image is an image of the first color space, and the processing module 620 is further configured to:

    perform the first image processing on the first image to obtain a second image, where the second image is an image of the second color space, and the second image stream includes the second image;
    perform the second image processing on the first image to obtain a third image, where the third image is an image of the first color space, and the third image stream includes the third image;
    perform the third image processing on the third image to obtain a fourth image, where the fourth image is an image of the second color space, and the fourth image stream includes the fourth image; and
    fuse the second image and the fourth image to obtain a fifth image, where the fifth image stream includes the fifth image.

Optionally, in an embodiment, the processing module 620 is further configured to:

    store the first image in a memory of the electronic device; and
    obtain the first image from the memory of the electronic device, and perform the second image processing on the first image to obtain the third image.

Optionally, in an embodiment, the processing module 620 is further configured to:

    store the third image in the memory of the electronic device; and
    obtain the third image from the memory of the electronic device, and perform the third image processing on the third image to obtain the fourth image.

Optionally, in an embodiment, an image size of the third image is less than an image size of the first image; and/or definition of the fifth image is higher than definition of the second image.

Optionally, in an embodiment, the electronic device includes a first image signal processor and a second image signal processor, the first image signal processor is configured to perform the first image processing on the first image to obtain the second image, the second image signal processor is configured to perform the third image processing on the third image to obtain the fourth image, and the processing module 620 is further configured to: obtain an invocation instruction, where the invocation instruction is used to instruct to run the second image signal processor.

Optionally, in an embodiment, an image enhancement algorithm includes at least one of the following:
a denoising algorithm, a super-resolution algorithm, a deblurring algorithm, a contrast adjustment algorithm, a brightness adjustment algorithm, or a high dynamic range image algorithm.

Optionally, in an embodiment, the processing module 620 is specifically configured to:
determine that the status of the electronic device is a recording state, and an ambient brightness value of a photographing environment in which the electronic device is located is less than a first preset threshold.

Optionally, in an embodiment, the processing module 620 is specifically configured to:
determine that the status of the electronic device is a preview state, and an ambient brightness value of a photographing environment in which the electronic device is located is less than a first preset threshold.

Optionally, in an embodiment, the processing module 620 is specifically configured to:
determine that a photographing mode of the electronic device is a night mode, where the night mode is a mode in a camera application.

Optionally, as shown in FIG. 13, the display module 610 is configured to display a first interface, where the first interface is a preview interface or a recording interface. The processing module 620 is configured to: obtain a brightness parameter of the electronic device, where the brightness parameter is used to indicate ambient brightness of a photographing environment in which the electronic device is located; obtain a first image stream, where the first image stream is an image stream of first color space; determine, based on the ambient brightness, to perform first target processing and/or second target processing on the first image stream to obtain a fifth image stream, where the first target processing includes first image processing, the first image processing is used to convert the first image stream into second color space, the second target processing includes second image processing and third image processing, the second image processing includes downsampling and image enhancement, and the third image processing is used to convert an image stream obtained after the second image processing into the second color space; and display and/or store the fifth image stream.

Optionally, in an embodiment, the processing module 620 is specifically configured to:

perform the second target processing on the first image stream when the ambient brightness is less than or equal to a first brightness threshold, to obtain the fifth image stream;
perform the first target processing and the second target processing on the first image stream when the ambient brightness is greater than a first brightness threshold and less than a second brightness threshold, to obtain the fifth image stream; or
perform the first target processing on the first image stream when the ambient brightness is greater than or equal to a second brightness threshold, to obtain the fifth image stream.

Optionally, in an embodiment, the processing module 620 is specifically configured to:

perform the first image processing on the first image stream to obtain a second image stream of the second color space;
perform the second image processing on the first image stream to obtain a third image stream of the first color space;
perform the third image processing on the third image stream to obtain a fourth image stream of the second color space; and
fuse the second image stream and the fourth image stream to obtain the fifth image stream.

Optionally, in an embodiment, the first image stream includes a first image, the first image is an image of the first color space, and the processing module 620 is further configured to:

perform the first image processing on the first image to obtain a second image, where the second image is an image of the second color space, and the second image stream includes the second image;
perform the second image processing on the first image to obtain a third image, where the third image is an image of the first color space, and the third image stream includes the third image;

perform the third image processing on the third image to obtain a fourth image, where the fourth image is an image of the second color space, and the fourth image stream includes the fourth image; and
fuse the second image and the fourth image to obtain a fifth image, where the fifth image stream includes the fifth image.

Optionally, in an embodiment, the processing module 620 is specifically configured to:

store the first image in a memory of the electronic device; and
the performing the second image processing on the first image to obtain a third image includes:
obtaining the first image from the memory of the electronic device, and performing the second image processing on the first image to obtain the third image.

Optionally, in an embodiment, the processing module 620 is specifically configured to:

store the third image in the memory of the electronic device; and
obtain the third image from the memory of the electronic device, and perform the third image processing on the third image to obtain the fourth image.

Optionally, in an embodiment, an image size of the third image is less than an image size of the first image; and/or
definition of the fifth image is higher than definition of the second image.

Optionally, in an embodiment, the electronic device includes a first image signal processor and a second image signal processor, the first image signal processor is configured to perform the first image processing on the first image to obtain the second image, the second image signal processor is configured to perform the third image processing on the third image to obtain the fourth image, and the processing module 620 is further configured to: obtain an invocation instruction, where the invocation instruction is used to instruct to run the second image signal processor.

Optionally, in an embodiment, an image enhancement algorithm includes at least one of the following:
a denoising algorithm, a super-resolution algorithm, a deblurring algorithm, a contrast adjustment algorithm, a brightness adjustment algorithm, or a high dynamic range image algorithm.

It should be noted that the foregoing electronic device 600 is embodied in a form of a functional module. The term "module" herein may be implemented in a form of software and/or hardware. This is not specifically limited.

For example, the "module" may be a software program, a hardware circuit, or a combination thereof that implements the foregoing functions. The hardware circuit may include an application-specific integrated circuit (application-specific integrated circuit, ASIC), an electronic circuit, a memory and a processor (such as a shared processor, a dedicated processor, or a group of processors) configured to execute one or more software or firmware programs, a combined logic circuit, and/or another suitable component that supports the described function.

Therefore, the example units described in embodiments of this application can be implemented by using electronic hardware or a combination of computer software and electronic hardware. Whether the functions are implemented by hardware or software depends on specific applications and design constraints of the technical solutions. A person skilled in the art may use different methods for each specific application to implement the described functions, but this implementation should not be considered to be beyond the scope of this application.

FIG. 14 is a schematic diagram of a structure of an electronic device according to this application. A dashed line in FIG. 14 indicates that the unit or the module is optional. The electronic device 700 may be configured to implement the method described in the foregoing method embodiments.

The electronic device 700 includes one or more processors 701, and the one or more processors 701 may support the electronic device 700 in implementing the image processing method in the method embodiment. The processor 701 may be a general-purpose processor or a dedicated processor. For example, the processor 701 may be a central processing unit (central processing unit, CPU), a digital signal processor (digital signal processor, DSP), an application-specific integrated circuit (application-specific integrated circuit, ASIC), a field programmable gate array (field programmable gate array, FPGA), or another programmable logic device, such as a discrete gate, a transistor logic device, or a discrete hardware component.

The processor 701 may be configured to control the electronic device 700, execute a software program, and process data of the software program. The electronic device 700 may further include a communications unit 705, configured to implement signal input (receiving) and output (sending).

For example, the electronic device 700 may be a chip, the communications unit 705 may be an input and/or output circuit of the chip, or the communications unit 705 may be a communications interface of the chip, and the chip may be used as a part of a terminal device or another electronic device.

For another example, the electronic device 700 may be a terminal device, and the communications unit 705 may be a transceiver of the terminal device, or the communications unit 705 may be a transceiver circuit of the terminal device.

The electronic device 700 may include one or more memories 702, storing a program 704. The program 704 may be run by the processor 701 to generate an instruction 703, so that the processor 701 performs the image processing method in the foregoing method embodiments according to the instruction 703.

Optionally, the memory 702 may further store data. Optionally, the processor 701 may further read the data stored in the memory 702, where the data may be stored in a same storage address as the program 704, or the data may be stored in a different storage address from the program 704.

The processor 701 and the memory 702 may be disposed separately, or may be integrated together, for example, integrated onto a system on a chip (system on a chip, SOC) of a terminal device.

For example, the memory 702 may be configured to store a related program 704 of the image processing method provided in embodiments of this application, and the processor 701 may be configured to: when performing image processing, invoke the related program 704 of the image processing method that is stored in the memory 702 to perform the image processing method in embodiments of this application, for example, display a first interface, where the first interface is a preview interface or a recording interface; determine that a status of the electronic device meets a first preset condition; obtain a first image stream, where the first image stream is an image stream of first color space; perform first image processing on the first image stream to obtain a second image stream of second color space; perform second image processing on the first image stream to obtain a third image stream of the first color space, where the second image processing includes downsampling and image enhancement; perform third image processing on the third image stream to obtain a fourth image stream of the second color space; fuse the second image stream and the fourth image stream to obtain a fifth image stream; and display and/or store the fifth image stream.

This application further provides a computer program product. When the computer program product is executed by the processor 701, the method in any method embodiment of this application is implemented.

The computer program product may be stored in the memory 702, for example, may be the program 704. The program 704 undergoes processing processes such as preprocessing, compilation, assembly, and link, and is finally converted into an executable target file that can be executed by the processor 701.

This application further provides a computer-readable storage medium, storing a computer program. When the computer program is executed by a computer, the image processing method in any method embodiment of this application is implemented. The computer program may be a high-level language program, or may be an executable target program.

The computer-readable storage medium is, for example, the memory 702. The memory 702 may be a volatile memory or a non-volatile memory, or the memory 702 may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which serves as an external cache. By way of example and not limitation, many forms of RAMs are available, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A person of ordinary skill in the art may be aware that the example units and algorithm steps described in embodiments disclosed in this specification can be implemented by electronic hardware or a combination of computer software and electronic hardware. Whether the functions are implemented by hardware or software depends on specific applications and design constraints of the technical solutions. A person skilled in the art may use different methods for each specific application to implement the described functions, but this implementation should not be considered to be beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described embodiments of the electronic device are merely examples. For example, division into the modules is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, function units in embodiments of this application may be integrated into one processing unit, or each unit may exist alone physically, or two or more units may be integrated into one unit.

It should be understood that in embodiments of this application, sequence numbers of processes do not mean a sequence of execution. The sequence of execution of the processes should be determined according to functions and internal logic of the processes, and should not constitute any limitation on an implementation process of embodiments of this application.

In addition, the term "and/or" in this specification is merely an association relationship of associated objects, and indicates that three relationships may exist. For example, A and/or B may indicate the following three cases: Only A exists, both A and B exist, and only B exists. In addition, the character "/" in this specification usually indicates an "or" relationship between the associated objects.

When the function is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

**Claims**

1. An image processing method, applied to an electronic device (100), wherein the image processing method comprises the steps of:

displaying (S301) a first interface, wherein the first interface is a preview interface or a recording interface;
obtaining a brightness parameter of the electronic device (100), wherein the brightness parameter is used to indicate ambient brightness of a photographing environment in which the electronic device (100) is located;

obtaining (S303) a first image stream, wherein the first image stream is an image stream of raw color space;

determining, based on the ambient brightness, to perform first target processing (S304) and/or second target processing on the first image stream to obtain a fifth image stream, wherein the first target processing comprises first image processing (S304), the first image processing (S304) is used to convert the first image stream into RGB color space or YUV color space, the second target processing comprises second image processing (S305) and third image processing (S306), the second image processing (S305) comprises downsampling and image enhancement, and the third image processing (S306) is used to convert an image stream obtained after the second image processing (S305) into the RGB color space or the YUV color space; and

displaying and/or storing (S308) the fifth image stream; wherein

the determining step comprises:

when the ambient brightness is less than or equal to a first brightness threshold, performing the second target processing on the first image stream to obtain the fifth image stream;

when the ambient brightness is greater than a first brightness threshold and less than a second brightness threshold, performing the first target processing and the second target processing on the first image stream to obtain the fifth image stream; and

when the ambient brightness is greater than or equal to a second brightness threshold, performing the first target processing on the first image stream to obtain the fifth image stream; wherein

the performing the first target processing and the second target processing on the first image stream when the ambient brightness is greater than a first brightness threshold and less than a second brightness threshold, to obtain the fifth image stream comprises:

performing (S304) the first image processing on the first image stream to obtain a second image stream of the RGB color space or the YUV color space;

performing (S305) the second image processing on the first image stream to obtain a third image stream of the raw color space;

performing (S306) the third image processing on the third image stream to obtain a fourth image stream of the RGB color space or the YUV color space; and

fusing (307) the second image stream and the fourth image stream to obtain the fifth image stream.

2. The image processing method according to claim 1, wherein the first image stream comprises a first image, the first image is an image of the raw color space, and the method further comprises:

performing the first image processing on the first image to obtain a second image, wherein the second image is an image of the RGB color space or YUV color space, and the second image stream comprises the second image;

performing the second image processing on the first image to obtain a third image, wherein the third image is an image of the raw color space, and the third image stream comprises the third image;

performing the third image processing on the third image to obtain a fourth image, wherein the fourth image is an image of the RGB color space or YUV color space, and the fourth image stream comprises the fourth image; and

fusing the second image and the fourth image to obtain a fifth image, wherein the fifth image stream comprises the fifth image.

3. The image processing method according to claim 2, wherein before the performing the second image processing on the first image to obtain a third image, the method further comprises:

storing the first image in a memory of the electronic device (100); and

the performing the second image processing on the first image to obtain a third image comprises: obtaining the first image from the memory of the electronic device (100), and performing the second image processing on the first image to obtain the third image.

4. The image processing method according to claim 2 or 3, wherein before the performing the third image processing on the third image to obtain a fourth image, the method further comprises:

storing the third image in the memory of the electronic device (100); and

the performing the third image processing on the third image to obtain a fourth image comprises:

obtaining the third image from the memory of the electronic device (100), and performing the third image processing on the third image to obtain the fourth image.

5. The image processing method according to any one of claims 2 to 4, wherein an image size of the third image is less than an image size of the first image; and/or

image definition of the fifth image is higher than image definition of the second image.

6. The image processing method according to any one of claims 2 to 5, wherein the electronic device (100) comprises a first image signal processor and a second image signal processor, the first image signal processor is configured to perform the first image processing on the first image to obtain the second image, the second image signal processor is configured to perform the third image processing on the third image to obtain the fourth image, and the method further comprises the step of:

obtaining an invocation instruction, wherein the invocation instruction is used to instruct to run the second image signal processor.

7. The image processing method according to any one of claims 1 to 6, wherein an algorithm of the image enhancement comprises at least one of the following:

a denoising algorithm, a super-resolution algorithm, a deblurring algorithm, a contrast adjustment algorithm, a brightness adjustment algorithm, or a high dynamic range image algorithm.

8. The image processing method according to any one of claims 1 to 7, wherein

when the electronic device (100) is in a preview state, the first interface is a preview interface; or when the electronic device (100) is in a recording state, the first interface is a recording interface.

9. The image processing method according to any one of claims 1 to 8, wherein the photographing mode of the electronic device (100) is a night mode, wherein the night mode is a mode in a camera application.

10. An electronic device (100), comprising:

one or more processors and a memory, wherein the memory is coupled to the one or more processors, the memory is configured to store computer program code, the computer program code comprises computer instructions, which when the program code is executed by the one or more processors, cause the one or more processors to carry out the image processing method according to any one of the claims 1 to 9.

11. A chip system, wherein the chip system is applied to an electronic device (100), the chip system comprises one or more processors, wherein the one or more processors are configured to carry out the image processing method according to any one of claims 1 to 9.

12. A computer-readable storage medium, wherein the computer-readable storage medium stores a computer program, and when the computer program is executed by a processor, causes the processor to carry out the image processing method according to any one of claims 1 to 9.

13. A computer program product, wherein the computer program product comprises computer program code, and when the computer program code is executed by a processor, causes the processor to carry out the image processing method according to any one of claims 1 to 9.

**Patentansprüche**

1. Bildverarbeitungsverfahren, das auf eine elektronische Vorrichtung (100) angewendet wird, wobei das Bildverarbeitungsverfahren die Schritte umfasst:

Anzeigen (S301) einer ersten Schnittstelle, wobei die erste Schnittstelle eine Vorschauschnittstelle oder eine Aufzeichnungsschnittstelle ist;
Erhalten eines Helligkeitsparameters der elektronischen Vorrichtung (100), wobei der Helligkeitsparameter verwendet wird, um die Umgebungshelligkeit einer Fotografierumgebung anzuzeigen, in der sich die elektronische Vorrichtung (100) befindet;
Erhalten (S303) eines ersten Bildstroms, wobei der erste Bildstrom ein Bildstrom eines Rohfarbraums ist;
Bestimmen, basierend auf der Umgebungshelligkeit, um eine erste Zielverarbeitung (S304) und/oder eine zweite Zielverarbeitung auf dem ersten Bildstrom durchzuführen, um einen fünften Bildstrom zu erhalten, wobei die erste Zielverarbeitung eine erste Bildverarbeitung (S304) umfasst, die erste Bildverarbeitung (S304) verwendet wird, um den ersten Bildstrom in den RGB-Farbraum oder den YUV-Farbraum umzuwandeln, die zweite Zielverarbeitung eine zweite Bildverarbeitung (S305) und eine dritte Bildverarbeitung (S306) umfasst, die zweite Bildverarbeitung (S305) Downsampling und Bildverbesserung umfasst, und die dritte Bildverarbeitung (S306) verwendet wird, um einen Bildstrom, der nach der zweiten Bildverarbeitung (S305) erhalten wird, in den RGB-Farbraum oder den YUV-Farbraum umzuwandeln; und
Anzeigen und/oder Speichern (S308) des fünften Bildstroms; wobei
der Bestimmungsschritt umfasst:

wenn die Umgebungshelligkeit kleiner als oder gleich einem ersten Helligkeitsschwellenwert ist, Durchführen der zweiten Zielverarbeitung auf dem ersten Bildstrom, um den fünften Bildstrom zu erhalten; wenn die Umgebungshelligkeit größer als ein erster Helligkeitsschwellenwert und kleiner als ein zweiter Helligkeitsschwellenwert ist, Durchführen der ersten Zielverarbeitung und der zweiten Zielverarbeitung auf dem ersten Bildstrom, um den fünften Bildstrom zu erhalten; und wenn die Umgebungshelligkeit größer als oder gleich einem zweiten Helligkeitsschwellenwert ist, Durchführen der ersten Zielverarbeitung auf dem ersten Bildstrom, um den fünften Bildstrom zu erhalten; wobei das Durchführen der ersten Zielverarbeitung und der zweiten Zielverarbeitung auf dem ersten Bildstrom, wenn die Umgebungshelligkeit größer als ein erster Helligkeitsschwellenwert und kleiner als ein zweiter Helligkeitsschwellenwert ist, um den fünften Bildstrom zu erhalten, umfasst:

Durchführen (S304) der ersten Bildverarbeitung auf dem ersten Bildstrom, um einen zweiten Bildstrom des RGB-Farbraums oder des YUV-Farbraums zu erhalten; Durchführen (S305) der zweiten Bildverarbeitung auf dem ersten Bildstrom, um einen dritten Bildstrom des Rohfarbraums zu erhalten; Durchführen (S306) der dritten Bildverarbeitung auf dem dritten Bildstrom, um einen vierten Bildstrom des RGB-Farbraums oder des YUV-Farbraums zu erhalten; und Fusionieren (307) des zweiten Bildstroms und des vierten Bildstroms, um den fünften Bildstrom zu erhalten.

**2.** Bildverarbeitungsverfahren nach Anspruch 1, wobei der erste Bildstrom ein erstes Bild umfasst, das erste Bild ein Bild des Rohfarbraums ist und das Verfahren ferner umfasst:

Durchführen der ersten Bildverarbeitung auf dem ersten Bild, um ein zweites Bild zu erhalten, wobei das zweite Bild ein Bild des RGB-Farbraums oder des YUV-Farbraums ist und der zweite Bildstrom das zweite Bild umfasst; Durchführen der zweiten Bildverarbeitung auf dem ersten Bild, um ein drittes Bild zu erhalten, wobei das dritte Bild ein Bild des Rohfarbraums ist und der dritte Bildstrom das dritte Bild umfasst;

Durchführen der dritten Bildverarbeitung auf dem dritten Bild, um ein viertes Bild zu erhalten, wobei das vierte Bild ein Bild des RGB-Farbraums oder des YUV-Farbraums ist und der vierte Bildstrom das vierte Bild umfasst; und Fusionieren des zweiten Bilds und des vierten Bilds, um ein fünftes Bild zu erhalten, wobei der fünfte Bildstrom das fünfte Bild umfasst.

**3.** Bildverarbeitungsverfahren nach Anspruch 2, wobei vor dem Durchführen der zweiten Bildverarbeitung auf dem ersten Bild, um ein drittes Bild zu erhalten, das Verfahren ferner umfasst:

Speichern des ersten Bilds in einem Speicher der elektronischen Vorrichtung (100); und das Durchführen der zweiten Bildverarbeitung auf dem ersten Bild, um ein drittes Bild zu erhalten, umfasst: Erhalten des ersten Bilds aus dem Speicher der elektronischen Vorrichtung (100) und Durchführen der zweiten Bildverarbeitung auf dem ersten Bild, um das dritte Bild zu erhalten.

**4.** Bildverarbeitungsverfahren nach Anspruch 2 oder 3, wobei vor dem Durchführen der dritten Bildverarbeitung auf dem dritten Bild, um ein viertes Bild zu erhalten, das Verfahren ferner umfasst:

Speichern des dritten Bilds in dem Speicher der elektronischen Vorrichtung (100); und das Durchführen der dritten Bildverarbeitung auf dem dritten Bild, um ein viertes Bild zu erhalten, umfasst: Erhalten des dritten Bilds aus dem Speicher der elektronischen Vorrichtung (100) und Durchführen der dritten Bildverarbeitung auf dem dritten Bild, um das vierte Bild zu erhalten.

**5.** Bildverarbeitungsverfahren nach einem der Ansprüche 2 bis 4, wobei eine Bildgröße des dritten Bilds kleiner als eine Bildgröße des ersten Bilds ist; und/oder die Bildauflösung des fünften Bilds höher als die Bildauflösung des zweiten Bilds ist.

**6.** Bildverarbeitungsverfahren nach einem der Ansprüche 2 bis 5, wobei die elektronische Vorrichtung (100) einen ersten Bildsignalprozessor und einen zweiten Bildsignalprozessor umfasst, der erste Bildsignalprozessor konfiguriert ist, um die erste Bildverarbeitung auf dem ersten Bild durchzuführen, um das zweite Bild zu erhalten, der zweite Bildsignalprozessor konfiguriert ist, um die dritte Bildverarbeitung auf dem dritten Bild durchzuführen, um das vierte Bild zu erhalten, und das Verfahren ferner den Schritt umfasst: Erhalten einer Aufrufanweisung, wobei die Aufrufanweisung verwendet wird, um anzuweisen, den zweiten Bildsignalprozessor laufen zu lassen.

7. Bildverarbeitungsverfahren nach einem der Ansprüche 1 bis 6, wobei ein Algorithmus der Bildverbesserung mindestens eines der folgenden umfasst: einen Entrauschungsalgorithmus, einen Superauflösungsalgorithmus, einen Entschärfungsalgorithmus, einen Kontrastanpassungsalgorithmus, einen Helligkeitsanpassungsalgorithmus oder einen Bildalgorithmus mit hohem Dynamikbereich.

8. Bildverarbeitungsverfahren nach einem der Ansprüche 1 bis 7, wobei

   wenn sich die elektronische Vorrichtung (100) in einem Vorschauzustand befindet, die erste Schnittstelle eine Vorschauschnittstelle ist; oder wenn sich die elektronische Vorrichtung (100) in einem Aufnahmezustand befindet, die erste Schnittstelle eine Aufnahmeschnittstelle ist.

9. Bildverarbeitungsverfahren nach einem der Ansprüche 1 bis 8, wobei der Fotografiermodus der elektronischen Vorrichtung (100) ein Nachtmodus ist, wobei der Nachtmodus ein Modus in einer Kameraanwendung ist.

10. Elektronische Vorrichtung (100), umfassend:

    einen oder mehrere Prozessoren und einen Speicher, wobei
    der Speicher mit einem oder mehreren Prozessoren gekoppelt ist, der Speicher konfiguriert ist, um Computerprogrammcode zu speichern, der Computerprogrammcode Computeranweisungen umfasst, die, wenn der Programmcode durch den einen oder die mehreren Prozessoren ausgeführt wird, den einen oder die mehreren Prozessoren veranlassen, das Bildverarbeitungsverfahren nach einem der Ansprüche 1 bis 9 vorzunehmen.

11. Chipsystem, wobei das Chipsystem auf eine elektronische Vorrichtung (100) angewendet wird, wobei das Chipsystem einen oder mehrere Prozessoren umfasst, wobei der eine oder die mehreren Prozessoren konfiguriert sind, um das Bildverarbeitungsverfahren nach einem der Ansprüche 1 bis 9 vorzunehmen.

12. Computerlesbares Speicherungsmedium, wobei das computerlesbare Speicherungsmedium ein Computerprogramm speichert, und wenn das Computerprogramm durch einen Prozessor ausgeführt wird, der Prozessor veranlasst wird, das Bildverarbeitungsverfahren nach einem der Ansprüche 1 bis 9 vorzunehmen.

13. Computerprogrammprodukt, wobei das Computerprogrammprodukt einen Computerprogrammcode umfasst, und wenn der Computerprogrammcode durch einen Prozessor ausgeführt wird, der Prozessor veranlasst wird, das Bildverarbeitungsverfahren nach einem der Ansprüche 1 bis 9 vorzunehmen.

**Revendications**

1. Procédé de traitement d'image, appliqué à un dispositif électronique (100), dans lequel le procédé de traitement d'image comprend les étapes consistant à :

   afficher (S301) une première interface, dans lequel la première interface est une interface de prévisualisation ou une interface d'enregistrement ;
   obtenir un paramètre de luminosité du dispositif électronique (100), dans lequel le paramètre de luminosité est utilisé pour indiquer la luminosité ambiante d'un environnement de prise de vues dans lequel se trouve le dispositif électronique (100) ;
   obtenir (S303) un premier flux d'images, dans lequel le premier flux d'images est un flux d'images de l'espace colorimétrique brut ;
   déterminer, en fonction de la luminosité ambiante, la nécessité de réaliser un premier traitement cible (S304) et/ou un second traitement cible sur le premier flux d'images pour obtenir un cinquième flux d'images, dans lequel le premier traitement cible comprend le premier traitement d'image (S304), le premier traitement d'image (S304) est utilisé pour convertir le premier flux d'images dans l'espace colorimétrique RVB ou dans l'espace colorimétrique YUV, le second traitement cible comprend le deuxième traitement d'image (S305) et le troisième traitement d'image (S306), le deuxième traitement d'image (S305) comprend le sous-échantillonnage et l'amélioration de l'image, et le troisième traitement d'image (S306) est utilisé pour convertir un flux d'images obtenu après le deuxième traitement d'image (S305) dans l'espace colorimétrique RVB ou l'espace colorimétrique YUV ; et
   afficher et/ou stocker (S308) le cinquième flux d'images ; dans lequel
   l'étape de détermination comprend :

      lorsque la luminosité ambiante est inférieure ou égale à un premier seuil de luminosité, la réalisation du second traitement cible sur le premier flux d'images pour obtenir le cinquième flux d'images ;
      lorsque la luminosité ambiante est supérieure à un premier seuil de luminosité et inférieure à un second seuil de luminosité, la réalisation du premier traitement de cible et du second traitement de cible sur le premier flux d'images pour obtenir le cinquième flux d'images ; et

lorsque la luminosité ambiante est supérieure ou égale à un second seuil de luminosité, la réalisation du premier traitement cible sur le premier flux d'images pour obtenir le cinquième flux d'images ; dans lequel

la réalisation du premier traitement de cible et du second traitement de cible sur le premier flux d'images lorsque la luminosité ambiante est supérieure à un premier seuil de luminosité et inférieure à un second seuil de luminosité, pour obtenir le cinquième flux d'images comprend :

la réalisation (S304) du premier traitement d'image sur le premier flux d'images pour obtenir un deuxième flux d'images de l'espace colorimétrique RVB ou l'espace colorimétrique YUV ;
la réalisation (S305) du deuxième traitement d'image sur le premier flux d'images pour obtenir un troisième flux d'images de l'espace colorimétrique brut ;
la réalisation (S306) du troisième traitement d'image sur le troisième flux d'images pour obtenir un quatrième flux d'images de l'espace colorimétrique RVB ou de l'espace colorimétrique YUV ; et
fusionner (307) le deuxième flux d'images et le quatrième flux d'images pour obtenir le cinquième flux d'images.

**2.** Procédé de traitement d'image selon la revendication 1, dans lequel le premier flux d'images comprend une première image, la première image est une image de l'espace colorimétrique brut, et le procédé comprend en outre :

la réalisation du premier traitement d'image sur la première image pour obtenir une deuxième image, dans lequel la deuxième image est une image de l'espace colorimétrique RVB ou de l'espace colorimétrique YUV, et le deuxième flux d'images comprend la deuxième image ;
la réalisation du deuxième traitement d'image sur la première image pour obtenir une troisième image, dans lequel la troisième image est une image de l'espace colorimétrique brut, et le troisième flux d'images comprend la troisième image ;
la réalisation du troisième traitement d'image sur la troisième image pour obtenir une quatrième image, dans lequel la quatrième image est une image de l'espace colorimétrique RVB ou de l'espace colorimétrique YUV, et le quatrième flux d'images comprend la quatrième image ; et
la fusion de la deuxième image et la quatrième image pour obtenir une cinquième image, dans lequel le cinquième flux d'images comprend la cinquième image.

**3.** Procédé de traitement d'image selon la revendication 2, dans lequel, avant la réalisation du deuxième traitement d'image sur la première image pour obtenir une troisième image, le procédé comprend en outre :

le stockage de la première image dans une mémoire du dispositif électronique (100) ; et
la réalisation du deuxième traitement d'image sur la première image pour obtenir une troisième image comprend :
l'obtention de la première image à partir de la mémoire du dispositif électronique (100), et la réalisation du deuxième traitement d'image sur la première image pour obtenir la troisième image.

**4.** Procédé de traitement d'image selon la revendication 2 ou 3, dans lequel, avant la réalisation du troisième traitement d'image sur la troisième image pour obtenir une quatrième image, le procédé comprend en outre :

le stockage de la troisième image dans la mémoire du dispositif électronique (100) ; et
la réalisation du troisième traitement d'image sur la troisième image pour obtenir une quatrième image comprend :
l'obtention de la troisième image à partir de la mémoire du dispositif électronique (100), et la réalisation du troisième traitement d'image sur la troisième image pour obtenir la quatrième image.

**5.** Procédé de traitement d'image selon l'une quelconque des revendications 2 à 4, dans lequel la taille de la troisième image est inférieure à la taille de la première image ; et/ou
la définition de l'image de la cinquième image est supérieure à celle de la deuxième image.

**6.** Procédé de traitement d'image selon l'une quelconque des revendications 2 à 5, dans lequel le dispositif électronique (100) comprend un premier processeur de signal d'image et un second processeur de signal d'image, le premier processeur de signal d'image est configuré pour réaliser le premier traitement d'image sur la première image afin d'obtenir la seconde image, le second processeur de signal d'image est configuré pour réaliser le troisième traitement d'image sur la troisième image afin d'obtenir la quatrième image, et le procédé comprend en outre l'étape consistant à :

obtenir une instruction d'invocation, dans lequel l'instruction d'invocation est utilisée pour ordonner l'exécution du second processeur de signal d'image.

7. Procédé de traitement d'image selon l'une quelconque des revendications 1 à 6, dans lequel un algorithme de l'amélioration d'image comprend au moins l'un des éléments suivants :

un algorithme de débruitage, un algorithme de super-résolution, un algorithme de correction du flou, un algorithme d'ajustement de contraste, un algorithme d'ajustement de la luminosité ou un algorithme d'image à gamme dynamique élevée.

8. Procédé de traitement d'image selon l'une quelconque des revendications 1 à 7, dans lequel

lorsque le dispositif électronique (100) est dans un état de prévisualisation, la première interface est une interface de prévisualisation ; ou lorsque le dispositif électronique (100) est dans un état d'enregistrement, la première interface est une interface d'enregistrement.

9. Procédé de traitement d'image selon l'une quelconque des revendications 1 à 8, dans lequel le mode de prise de vues du dispositif électronique (100) est un mode nocturne, dans lequel le mode nocturne est un mode dans une application d'appareil photo.

10. Dispositif électronique (100), comprenant :

un ou plusieurs processeurs et une mémoire, dans lequel
la mémoire est couplée au ou aux processeurs, la mémoire est configurée pour stocker un code de programme informatique, le code de programme informatique comprend des instructions informatiques qui, lorsque le code de programme est exécuté par le ou les processeurs, amènent le ou les processeurs à mettre en oeuvre le procédé de traitement d'image selon l'une quelconque des revendications 1 à 9.

11. Système de puce, dans lequel le système de puce est appliqué à un dispositif électronique (100), le système de puce comprend un ou plusieurs processeurs, dans lequel le ou les processeurs sont configurés pour mettre en oeuvre le procédé de traitement d'image selon l'une quelconque des revendications 1 à 9.

12. Support de stockage lisible par ordinateur, dans lequel le support de stockage lisible par ordinateur stocke un programme informatique, et lorsque le programme informatique est exécuté par un processeur, amène le processeur à mettre en oeuvre le procédé de traitement d'image selon l'une quelconque des revendications 1 à 9.

13. Produit-programme informatique, dans lequel le produit-programme informatique comprend un code de programme informatique, et lorsque le code de programme informatique est exécuté par un processeur, amène le processeur à mettre en oeuvre le procédé de traitement d'image selon l'une quelconque des revendications 1 à 9.

Electronic device 100

Antenna 1　Antenna 2

| Mobile communications module 150 | Wireless communications module 160 |

| Speaker 170A |  |  |
| Receiver 170B | Audio module 170 |  |
| Microphone 170C |  |  |
| Headset jack 170D |  |  |

Display 194

Camera 193

Indicator 192

Motor 191

Button 190

Internal memory 121

SIM card interface 195

External memory interface 120

Processor 110

Sensor module 180

Pressure sensor 180A

Gyro sensor 180B

Barometric pressure sensor 180C

Magnetic sensor 180D

Acceleration sensor 180E

Distance sensor 180F

Optical proximity sensor 180G

Fingerprint sensor 180H

Temperature sensor 180J

Touch sensor 180K

Ambient light sensor 180L

Bone conduction sensor 180M

USB interface 130

Power

Charging management module 140

Power management module 141

Battery 142

FIG. 1

Application
layer 210

Camera application

Application
framework layer 220

Camera access interface

Camera
manager

Camera
device

Hardware abstraction
layer 230

Camera hardware
abstraction layer
2301

Camera algorithm 2302

First algorithm

Driver layer 240

Camera device driver

Hardware
layer 250

Camera device 2501

Second algorithm

FIG. 2

Photographed
object 261

5G 21:00

MOVIE PHOTO **VIDEO** PRO MORE

FIG. 3(a)

Photographed
object 261

5G | 21:00

MOVIE | PHOTO | **VIDEO** | PRO | MORE

FIG. 3(b)

Photographed
object 262

5G 5G 22:00

Hang
up

Switch to
Voice Call

Switch
Camera

FIG. 4(a)

Photographed object 262

FIG. 4(b)

| | |
|---|---|
| Display a first interface | S301 |
| Determine that a status of an electronic device meets a first preset condition | S302 |
| Obtain a first image stream | S303 |
| Perform first image processing on the first image stream to obtain a second image stream of second color space | S304 |
| Perform second image processing on the first image stream to obtain a third image stream of first color space | S305 |
| Perform third image processing on the third image stream to obtain a fourth image stream of the second color space | S306 |
| Fuse the second image stream and the fourth image stream to obtain a fifth image stream | S307 |
| Display and/or store the fifth image stream | S308 |

FIG. 5

300

| Image sensor 310 | —Raw→ | First image signal processor 320 | —RGB/ YUV→ | Fusion module 360 | → | Third image signal processor 370 | → | Preview stream |

Second image signal processor 350 —RGB/ YUV→

Video stream

Raw

Raw-domain algorithm module 340 ↔ Memory 330

FIG. 6

400

| Image sensor 410 | —Raw→ | First image signal processor 420 | —RGB/ YUV→ | Fusion module 450 | → | Third image signal processor 460 | → | Preview stream |

Second image signal processor 440 —RGB/ YUV→

Video stream

Raw

Raw-domain algorithm module 430

FIG. 7

FIG. 8

| R$_1$ | G | R$_2$ | G |
|-------|---|-------|---|
| G | B | G | B |
| R$_3$ | G | R$_4$ | G |
| G | B | G | B |

FIG. 9

FIG. 10(a)

FIG. 10(b)

FIG. 11(a)

FIG. 11(b)

FIG. 12

Electronic device 600

Display module 610

Processing module 620

FIG. 13

700

701

Processor

Instruction

702

Memory

Program

703

704

Communications
unit

705

FIG. 14

**EP 4 195 679 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111784603 A

- CN 111614867 A

**Non-patent literature cited in the description**

- Progressive Joint Low-light Enhancement and Noise Removal for Raw Images. **YUCHENG LU et al.** arXiv.org. Cornell University Library, 201 Olin Library Cornell University, 28 June 2021